# EUROPEAN PATENT APPLICATION

(11) **EP 4 718 304 A1**
(43) Date of publication of application: **01.04.2026**
(21) Application number: 25205093.5
(22) Date of filing: 26.09.2025
(51) Int. Cl.: G06F 21/62, G06F 21/31, G06F 21/36, G06F 21/32

(54) **AUTHENTICATION FOR VIEWING CONTENT ON AN ELECTRONIC DEVICE**

(30) Priority: 26.09.2024 US 202463699798 P; 06.06.2025 US 202563819497 P; 12.09.2025 US 202563880966 P; 16.09.2025 US 202519330424
(71) Applicant: Apple Inc., Cupertino, CA 95014 (US)
(72) Inventor: STERN, Matthew L., Cupertino, 95014 (US); WANG, Jue, Cupertino, 95014 (US); CASTELLANOS, Esteban, Cupertino, 95014 (US); KHAN, Omar R., Cupertino, 95014 (US); SCOTT, David, Cupertino, 95014 (US); LIPTON, David A., Cupertino, 95014 (US); CHUA, Michelle, Cupertino, 95014 (US); RAMBO, Brent, Cupertino, 95014 (US); YANG, Yunlei, Cupertino, 95014 (US)
(74) Representative: Barton, Russell Glen

(57) **Abstract**

Access to content of a secured document can be restricted and systems and methods are provided for obtaining access to the content of a secured document. An electronic device in communication with one or more displays and one or more input devices, receives, from a sender device, a secured document including content. In some examples, in response to receiving the secured document, one or more prompts for one or more respective inputs for accessing the secured document can be displayed. While displaying the one or more prompts one or more respective inputs can be detected. In response to detecting the one or more respective inputs, and in accordance with a determination that the one or more respective inputs satisfy one or more criteria, including a criterion that is satisfied when the one or more respective inputs authenticate a user, obtaining access to the content of the secured document.

## Description

### Cross-Reference to Related Applications

This application claims the benefit of U.S. Provisional Application No. 63/699,798, filed September 26, 2024, U.S. Provisional Application No. 63/819,497, filed June 6, 2025, U.S. Provisional Application No. 63/880,966, filed September 12, 2025, and U.S. Patent Application No. 19/330,424, filed September 16, 2025, the contents of which are herein incorporated by reference in their entireties for all purposes.

### Field of Disclosure

This relates generally to systems and methods for authenticating a user to view secured content on an electronic device associated with the user in a three-dimensional environment.

### Background of the Disclosure

Electronic devices grant and restrict access to documents based on user authentication. For example, access to various features is optionally granted in response to a user logging into the electronic device with a password.

### Summary of the Disclosure

Some examples of the disclosure are directed to systems and methods for an electronic device in communication with a display and one or more input devices receiving, from a sender device, a secured document including content. In some examples, in response to receiving the secured document, one or more prompts for one or more respective inputs for accessing the secured document can be displayed. While displaying the one or more prompts, one or more respective inputs can be detected. In response to detecting the one or more respective inputs, and in accordance with a determination that the one or more respective inputs satisfy one or more criteria, including a criterion that is satisfied when the one or more respective inputs authenticate a user, an electronic device obtains access to the content of the secured document.

Some examples of the disclosure are directed to systems and methods for an electronic device in communication with one or more displays, one or more input devices, and a second electronic device receiving secured content transmitted by the second electronic device, wherein the secured content is associated with a viewpoint of a user of the second electronic device and includes at least a portion of the three-dimensional environment of the second electronic device. In some examples, in response to receiving the secured content, the electronic device displays, via the one or more displays, a first user interface associated with accessing the secured content. In some examples, the first user interface includes a representation of the at least the portion of the three-dimensional environment that is visible from the viewpoint of the user of the second electronic device, wherein the representation of the at least the portion of the three-dimensional environment is displayed with a first amount of occlusion, and an indication of an authentication process associated with obtaining access to the secured content. While displaying the first user interface, the electronic device detects, via the one or more input devices, one or more inputs. In some examples, in response to detecting the one or more inputs and in accordance with a determination that the one or more inputs satisfy one or more criteria, the electronic device obtains access to the secured content transmitted by the second electronic device, including updating display of the representation of the at least the portion of the three-dimensional environment of the second electronic device to have a second amount of occlusion, less than the first amount of occlusion. In some examples, in response to detecting the one or more inputs and in accordance with a determination that the one or more inputs do not satisfy the one or more criteria, the electronic device maintains the display of the representation of the at least the portion of the three-dimensional environment of the second electronic device with the first amount of occlusion.

Some examples of the disclosure are directed to a method comprising, at an electronic device in communication with one or more displays, and one or more input devices. In some examples, while displaying, via the one or more displays, secured content in a three-dimensional environment, the electronic device detects, via the one or more input devices, an input corresponding to a request to perform one of more first operations involving the secured content, including capturing an image of the secured content. In some examples, the image includes at least a portion of the three-dimensional environment surrounding the secured content that is visible from a viewpoint of a user of the electronic device. Although primarily referred to herein as capturing an image of the secured content (and/or the environment surrounding the secured content that is visible from the viewpoint of a user of the electronic device), it is understood that the disclosure applies to capturing one or more static images and/or video, and optically includes screen recording or other video recording operations. In some examples, in response to detecting the input, the electronic device initiates a process to perform the one or more first operations, including generating a first image corresponding to the image, and displays, via the one or more displays, a representation of the first image in the three-dimensional environment. In some examples, the representation of the first image includes a visual indication that visibility of the secured content is restricted, without including the secured content, and an occluded representation of the at least the portion of the three-dimensional environment that is visible from the viewpoint of the user of the electronic device.

Some examples of the disclosure are directed to systems and methods of restricting the sharing of protected content at an electronic device, such as a sender device. Additionally or alternatively, in some examples, the electronic device blocks screen recording or other copying/saving functionality to avoid the viewer of the secured content from capturing or storing the secured content.

The full descriptions of these examples are provided in the Drawings and the Detailed Description, and it is understood that this Summary does not limit the scope of the disclosure in any way.

### Brief Description of the Drawings

For improved understanding of the various examples described herein, reference should be made to the Detailed Description below along with the following drawings. Like reference numerals often refer to corresponding parts throughout the drawings.
FIG. 1 illustrates an electronic device presenting an extended reality environment according to some examples of the disclosure.
FIGs. 2A-2B illustrate block diagrams of example architectures for electronic devices according to some examples of the disclosure.
FIG. 3 illustrates an example sender electronic device according to some examples of the disclosure.
FIG. 4 illustrates an example sender device according to some examples of the disclosure.
FIGs. 5A-5B illustrate an example receiver electronic device and interactions therewith according to some examples of the disclosure.
FIG. 6 illustrates an example prompt associated with one or more authentication options according to some examples of the disclosure.
FIG. 7 illustrates an example notification associated with an authentication failure according to some examples of the disclosure.
FIG. 8 illustrates another example prompt associated with one or more authentication options according to some examples of the disclosure.
FIGs. 9A-9C illustrate another example prompt and a confirmation notification according to some examples of the disclosure.
FIG. 10 illustrates example verification inputs for an electronic device within a trusted location boundary according to some examples of the disclosure.
FIG. 11 illustrates example authentication options for an electronic device located within a trusted location boundary according to some examples of the disclosure.
FIG. 12 illustrates another example prompt associated with one or more authentication options according to some examples of the disclosure.
FIGs. 13-14 illustrates example verification inputs using a verification card in a three-dimensional environment according to some examples of the disclosure.
FIG. 15 is a flow diagram illustrating an example method for obtaining access to secured content according to some examples of the disclosure.
FIG. 16 is a flow diagram illustrating an example method for obtaining access to secured content within a trusted location according to some examples of the disclosure.
FIG. 17 illustrates an example of a sender electronic device according to some examples of the disclosure.
FIG. 18 illustrates an example of a receiver electronic device and interactions therewith according to some examples of the disclosure.
FIGs. 19-22 illustrate an example of a receiver electronic device and interactions therewith according to some examples of the disclosure.
FIG. 23A and FIG. 23B illustrate an example of a receiver electronic device and interactions with therewith according to some examples of the disclosure.
FIG. 24 illustrates example verification inputs for an electronic device within a trusted location boundary according to some examples of the disclosure.
FIG. 25 is a flow diagram illustrating an example method for obtaining access to secured content according to some examples of the disclosure.
FIGs. 26-28 illustrate an example of an electronic device displaying secured content and interactions therewith according to some examples of the disclosure.
FIG. 29 is a flow diagram illustrating an example method for navigating to restricted content according to some examples of the disclosure.

### Detailed Description

Some examples of the disclosure are directed to systems and methods for an electronic device in communication with a display and one or more input devices receiving, from a sender device, a secured document including content. In some examples, in response to receiving the secured document, one or more prompts for one or more respective inputs for accessing the secured document can be displayed. While displaying the one or more prompts, one or more respective inputs can be detected. In response to detecting the one or more respective inputs, and in accordance with a determination that the one or more respective inputs satisfy one or more criteria, including a criterion that is satisfied when the one or more respective inputs authenticate a user, an electronic device obtains access to the content of the secured document.

Some examples of the disclosure are directed to systems and methods for an electronic device in communication with one or more displays, one or more input devices, and a second electronic device receiving secured content transmitted by the second electronic device, wherein the secured content is associated with a viewpoint of a user of the second electronic device and includes at least a portion of the three-dimensional environment of the second electronic device. In some examples, in response to receiving the secured content, the electronic device displays, via the one or more displays, a first user interface associated with accessing the secured content. In some examples, the first user interface includes a representation of the at least the portion of the three-dimensional environment that is visible from the viewpoint of the user of the second electronic device, wherein the representation of the at least the portion of the three-dimensional environment is displayed with a first amount of occlusion, and an indication of an authentication process associated with obtaining access to the secured content. While displaying the first user interface, the electronic device detects, via the one or more input devices, one or more inputs. In some examples, in response to detecting the one or more inputs and in accordance with a determination that the one or more inputs satisfy one or more criteria, the electronic device obtains access to the secured content transmitted by the second electronic device, including updating display of the representation of the at least the portion of the three-dimensional environment of the second electronic device to have a second amount of occlusion, less than the first amount of occlusion. In some examples, in response to detecting the one or more inputs and in accordance with a determination that the one or more inputs do not satisfy the one or more criteria, the electronic device maintains the display of the representation of the at least the portion of the three-dimensional environment of the second electronic device with the first amount of occlusion.

Some examples of the disclosure are directed to a method comprising, at an electronic device in communication with one or more displays, and one or more input devices. In some examples, while displaying, via the one or more displays, secured content in a three-dimensional environment, the electronic device detects, via the one or more input devices, an input corresponding to a request to perform one of more first operations involving the secured content, including capturing an image of the secured content. In some examples, the image includes at least a portion of the three-dimensional environment surrounding the secured content that is visible from a viewpoint of a user of the electronic device. In some examples, in response to detecting the input, the electronic device initiates a process to perform the one or more first operations, including generating a first image corresponding to the image, and displays, via the one or more displays, a representation of the first image in the three-dimensional environment. In some examples, the representation of the first image includes a visual indication that visibility of the secured content is restricted, without including the secured content, and an occluded representation of the at least the portion of the three-dimensional environment that is visible from the viewpoint of the user of the electronic device.

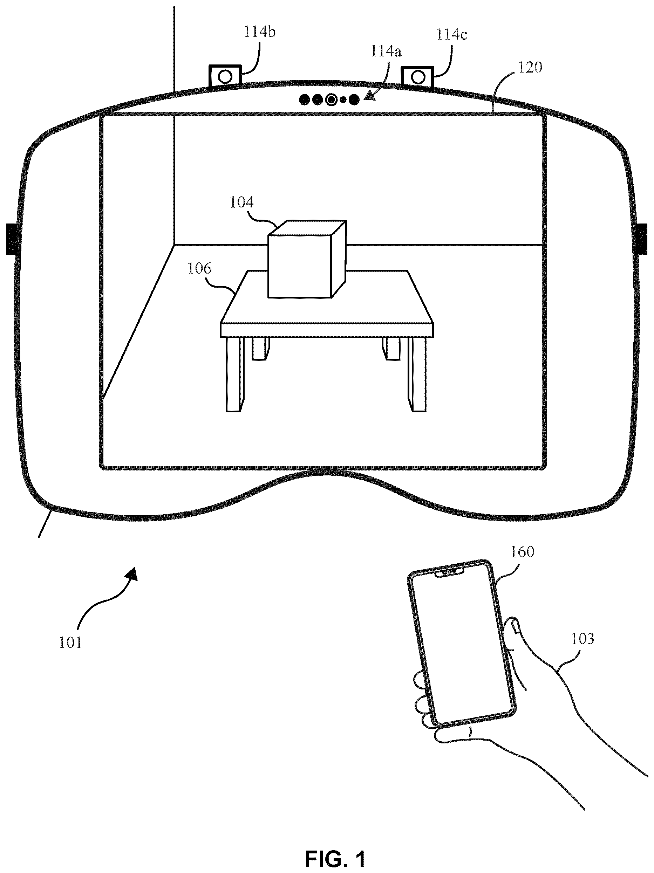

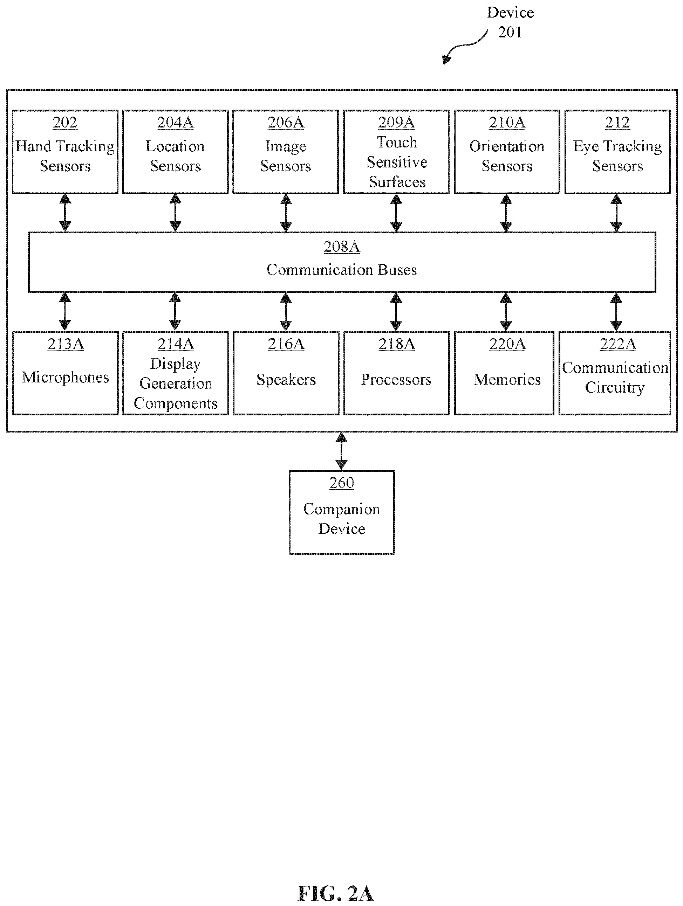

FIG. 1 illustrates an electronic device 101 presenting three-dimensional environment (e.g., an extended reality (XR) environment or a computer-generated reality (CGR) environment, optionally including representations of physical and/or virtual objects), according to some examples of the disclosure. In some examples, as shown in FIG. 1, electronic device 101 is a head-mounted display or other head-mountable device configured to be worn on a head of a user of the electronic device 101. Examples of electronic device 101 are described below with reference to the architecture block diagram of FIG. 2A. As shown in FIG. 1, electronic device 101 and table 106 are located in a physical environment. The physical environment may include physical features such as a physical surface (e.g., floor, walls) or a physical object (e.g., table, lamp, etc.). In some examples, electronic device 101 may be configured to detect and/or capture images of the physical environment including table 106 (illustrated in the field of view of electronic device 101).

In some examples, as shown in FIG. 1, electronic device 101 includes one or more internal image sensors 114a oriented towards a face of the user (e.g., eye tracking cameras as described below with reference to FIGs. 2A-2B). In some examples, internal image sensors 114a are used for eye tracking (e.g., detecting a gaze of the user). Internal image sensors 114a are optionally arranged on the left and right portions of display 120 to enable eye tracking of the user's left and right eyes. In some examples, electronic device 101 also includes external image sensors 114b and 114c facing outwards from the user to detect and/or capture the physical environment of the electronic device 101 and/or movements of the user's hands or other body parts.

In some examples, display 120 has a field of view visible to the user. In some examples, the field of view visible to the user is the same as a field of view of external image sensors 114b and 114c. For example, when display 120 is optionally part of a head-mounted device, the field of view of display 120 is optionally the same as or similar to the field of view of the user's eyes. In some examples, the field of view visible to the user is different from a field of view of external image sensors 114b and 114c (e.g., narrower than the field of view of external image sensors 114b and 114c). In other examples, the field of view of display 120 may be smaller than the field of view of the user's eyes. A viewpoint of a user determines what content is visible in the field of view, a viewpoint generally specifies a location and a direction relative to the three-dimensional environment. As the viewpoint of a user shifts, the field of view of the three-dimensional environment will also shift accordingly. In some examples, electronic device 101 may be an optical see-through device in which display 120 is a transparent or translucent display through which portions of the physical environment may be directly viewed. In some examples, display 120 may be included within a transparent lens and may overlap all or a portion of the transparent lens. In other examples, electronic device may be a video-passthrough device in which display 120 is an opaque display configured to display images of the physical environment using images captured by external image sensors 114b and 114c. While a single display is shown in FIG. 1, it is understood that display 120 optionally includes more than one display. For example, display 120 optionally includes a stereo pair of displays (e.g., left and right display panels for the left and right eyes of the user, respectively) having displayed outputs that are merged (e.g., by the user's brain) to create the view of the content shown in FIG. 1. In some examples, as discussed in more detail below with reference to FIGs. 2A-2B, the display 120 includes or corresponds to a transparent or translucent surface (e.g., a lens) that is not equipped with display capability (e.g., and is therefore unable to generate and display the virtual object 104) and alternatively presents a direct view of the physical environment in the user's field of view (e.g., the field of view of the user's eyes).

In some examples, the electronic device 101 is configured to display (e.g., in response to a trigger) a virtual object 104 in the three-dimensional environment. Virtual object 104 is represented by a cube illustrated in FIG. 1, which is not present in the physical environment, but is displayed in the three-dimensional environment positioned on the top of table 106 (e.g., real-world table or a representation thereof). Optionally, virtual object 104 is displayed on the surface of the table 106 in the three-dimensional environment displayed via the display 120 of the electronic device 101 in response to detecting the planar surface of table 106 in the physical environment 100.

It is understood that virtual object 104 is a representative virtual object and one or more different virtual objects (e.g., of various dimensionality such as two-dimensional or other three-dimensional virtual objects) can be included and rendered in a three-dimensional environment. For example, the virtual object can represent an application or a user interface displayed in the three-dimensional environment. In some examples, the virtual object can represent content corresponding to the application and/or displayed via the user interface in the three-dimensional environment. In some examples, the virtual object 104 is optionally configured to be interactive and responsive to user input (e.g., air gestures, such as air pinch gestures, air tap gestures, and/or air touch gestures), such that a user may virtually touch, tap, move, rotate, or otherwise interact with, the virtual object 104.

As discussed herein, one or more air pinch gestures performed by a user (e.g., with hand 103 in FIG. 1) are detected by one or more input devices of electronic device 101 and interpreted as one or more user inputs directed to content displayed by electronic device 101. Additionally or alternatively, in some examples, the one or more user inputs interpreted by the electronic device 101 as being directed to content displayed by electronic device 101 (e.g., the virtual object 104) are detected via one or more hardware input devices (e.g., controllers, touch pads, proximity sensors, buttons, sliders, knobs, etc.) rather than via the one or more input devices that are configured to detect air gestures, such as the one or more air pinch gestures, performed by the user. Such depiction is intended to be exemplary rather than limiting; the user optionally provides user inputs using different air gestures and/or using other forms of input.

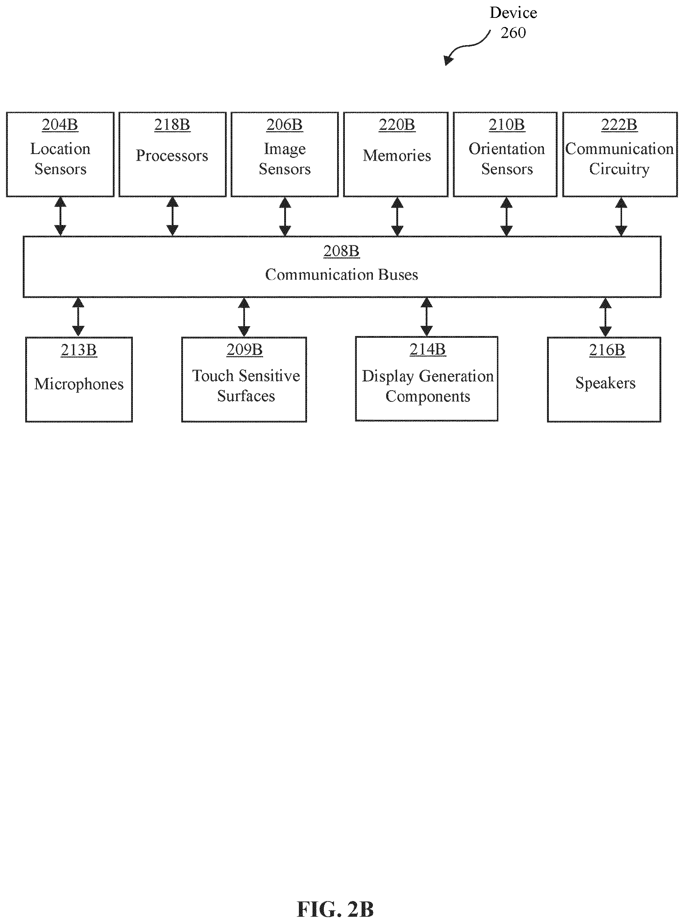

In some examples, the electronic device 101 may be configured to communicate with a second electronic device, such as a companion device. For example, as illustrated in FIG. 1, the electronic device 101 is optionally in communication with electronic device 160. In some examples, electronic device 160 corresponds to a mobile electronic device, such as a smartphone, a tablet computer, a smart watch, a laptop computer, or other electronic device. In some examples, electronic device 160 corresponds to a non-mobile electronic device, which is generally stationary and not easily moved within the physical environment (e.g., desktop computer, server, etc.). Additional examples of electronic device 160 are described below with reference to the architecture block diagram of FIG. 2B. In some examples, the electronic device 101 and the electronic device 160 are associated with a same user. For example, in FIG. 1, the electronic device 101 may be positioned on (e.g., mounted to) a head of a user and the electronic device 160 may be positioned near electronic device 101, such as in a hand 103 of the user (e.g., the hand 103 is holding the electronic device 160), a pocket or bag of the user, or a surface near the user. The electronic device 101 and the electronic device 160 are optionally associated with a same user account of the user (e.g., the user is logged into the user account on the electronic device 101 and the electronic device 160). Additional details regarding the communication between the electronic device 101 and the electronic device 160 are provided below with reference to FIGs. 2A-2B.

In some examples, displaying an object in a three-dimensional environment is caused by or enables interaction with one or more user interface objects in the three-dimensional environment. For example, initiation of display of the object in the three-dimensional environment can include interaction with one or more virtual options/affordances displayed in the three-dimensional environment. In some examples, a user's gaze may be tracked by the electronic device as an input for identifying one or more virtual options/affordances targeted for selection when initiating display of an object in the three-dimensional environment. For example, gaze can be used to identify one or more virtual options/affordances targeted for selection using another selection input. In some examples, a virtual option/affordance may be selected using hand-tracking input detected via an input device in communication with the electronic device. In some examples, objects displayed in the three-dimensional environment may be moved and/or reoriented in the three-dimensional environment in accordance with movement input detected via the input device.

In the descriptions that follows, an electronic device that is in communication with one or more displays and one or more input devices is described. It is understood that the electronic device optionally is in communication with one or more other physical user-interface devices, such as a touch-sensitive surface, a physical keyboard, a mouse, a joystick, a hand tracking device, an eye tracking device, a stylus, etc. Further, as described above, it is understood that the described electronic device, display and touch-sensitive surface are optionally distributed between two or more devices. Therefore, as used in this disclosure, information displayed on the electronic device or by the electronic device is optionally used to describe information outputted by the electronic device for display on a separate display device (touch-sensitive or not). Similarly, as used in this disclosure, input received on the electronic device (e.g., touch input received on a touch-sensitive surface of the electronic device, or touch input received on the surface of a stylus) is optionally used to describe input received on a separate input device, from which the electronic device receives input information.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, a television channel browsing application, and/or a digital video player application.

FIGs. 2A-2B illustrate block diagrams of example architectures for electronic devices according to some examples of the disclosure. In some examples, electronic device 201 and/or electronic device 260 include one or more electronic devices. For example, the electronic device 201 may be a portable device, an auxiliary device in communication with another device, a head-mounted display, a head-worn speaker, etc., respectively. In some examples, electronic device 201 corresponds to electronic device 101 described above with reference to FIG. 1. In some examples, electronic device 260 corresponds to electronic device 160 described above with reference to FIG. 1.

As illustrated in FIG. 2A, the electronic device 201 optionally includes one or more sensors, such as one or more hand tracking sensors 202, one or more location sensors 204A, one or more image sensors 206A (optionally corresponding to internal image sensors 114a and/or external image sensors 114b and 114c in FIG. 1), one or more touch-sensitive surfaces 209A, one or more motion and/or orientation sensors 210A, one or more eye tracking sensors 212, one or more microphones 213A or other audio sensors, one or more body tracking sensors (e.g., torso and/or head tracking sensors), etc. The electronic device 201 optionally includes one or more output devices, such as one or more display generation components 214A, optionally corresponding to display 120 in FIG. 1, one or more speakers 216A, one or more haptic output devices (not shown), etc. The electronic device 201 optionally includes one or more processors 218A, one or more memories 220A, and/or communication circuitry 222A. One or more communication buses 208A are optionally used for communication between the above-mentioned components of electronic device 201.

Additionally, the electronic device 260 optionally includes the same or similar components as the electronic device 201. For example, as shown in FIG. 2B, the electronic device 260 optionally includes one or more location sensors 204B, one or more image sensors 206B, one or more touch-sensitive surfaces 209B, one or more orientation sensors 210B, one or more microphones 213B, one or more display generation components 214B, one or more speakers 216B, one or more processors 218B, one or more memories 220B, and/or communication circuitry 222B. One or more communication buses 208B are optionally used for communication between the above-mentioned components of electronic device 260.

The electronic devices 201 and 260 are optionally configured to communicate via a wired or wireless connection (e.g., via communication circuitry 222A, 222B) between the two electronic devices. For example, as indicated in FIG. 2A, the electronic device 260 may function as a companion device to the electronic device 201. For example, in some examples, the electronic device 260 processes sensor inputs from electronic devices 201 and 260 and/or generates content for display using display generation components 214A of electronic device 201.

Communication circuitry 222A, 222B optionally includes circuitry for communicating with electronic devices, networks, such as the Internet, intranets, a wired network and/or a wireless network, cellular networks, and wireless local area networks (LANs). Communication circuitry 222A, 222B optionally includes circuitry for communicating using near-field communication (NFC) and/or short-range communication, such as Bluetooth^{®}, etc. In some examples, communication circuitry 222A, 222B includes or supports Wi-Fi (e.g., an 802.11 protocol), Ethernet, ultra-wideband ("UWB"), high frequency systems (e.g., 900 MHz, 2.4 GHz, and 5.6 GHz communication systems), or any other communications protocol, or any combination thereof.

One or more processors 218A, 218B include one or more general processors, one or more graphics processors, and/or one or more digital signal processors. In some examples, one or more processors 218A, 218B include one or more microprocessors, one or more central processing units, one or more application-specific integrated circuits, one or more field-programmable gate arrays, one or more programmable logic devices, or a combination of such devices. In some examples, memories 220A and/or 220B are a non-transitory computer-readable storage medium (e.g., flash memory, random access memory, or other volatile or nonvolatile memory or storage) that stores computer-readable instructions configured to be executed by the one or more processors 218A, 218B to perform the techniques, processes, and/or methods described herein. In some examples, memories 220A and/or 220B can include more than one non-transitory computer-readable storage medium. A non-transitory computer-readable storage medium can be any medium (e.g., excluding a signal) that can tangibly contain or store computer-executable instructions for use by or in connection with the instruction execution system, apparatus, or device. In some examples, the storage medium is a transitory computer-readable storage medium. In some examples, the storage medium is a non-transitory computer-readable storage medium. The non-transitory computer-readable storage medium can include, but is not limited to, magnetic, optical, and/or semiconductor storages. Examples of such storage include magnetic disks, optical discs based on compact disc (CD), digital versatile disc (DVD), or Blu-ray technologies, as well as persistent solid-state memory such as flash, solid-state drives, and the like.

In some examples, one or more display generation components 214A, 214B include a single display (e.g., a liquid-crystal display (LCD), organic light-emitting diode (OLED), or other types of display). In some examples, the one or more display generation components 214A, 214B include multiple displays. In some examples, the one or more display generation components 214A, 214B can include a display with touch capability (e.g., a touch screen), a projector, a holographic projector, a retinal projector, a transparent or translucent display, etc. In some examples, the electronic device does not include one or more display generation components 214A or 214B. For example, instead of the one or more display generation components 214A or 214B, some electronic devices include transparent or translucent lenses or other surfaces that are not configured to display or present virtual content. However, it should be understood that, in such instances, the electronic device 201 and/or the electronic device 260 are optionally equipped with one or more of the other components illustrated in FIGs. 2A and 2B and described herein, such as the one or more hand tracking sensors 202, one or more eye tracking sensors 212, one or more image sensors 206A, and/or the one or more motion and/or orientations sensors 210A. Alternatively, in some examples, the one or more display generation components 214A or 214B are provided separately from the electronic devices 201 and/or 260. For example, the one or more display generation components 214A, 214B are in communication with the electronic device 201 (and/or electronic device 260), but are not integrated with the electronic device 201 and/or electronic device 260 (e.g., within a housing of the electronic devices 201, 260). In some examples, electronic devices 201 and 260 include one or more touch-sensitive surfaces 209A and 209B, respectively, for receiving user inputs, such as tap inputs and swipe inputs or other gestures (e.g., hand-based or finger-based gestures). In some examples, the one or more display generation components 214A, 214B and the one or more touch-sensitive surfaces 209A, 209B form one or more touch-sensitive displays (e.g., a touch screen integrated with each of electronic devices 201 and 260 or external to each of electronic devices 201 and 260 that is in communication with each of electronic devices 201 and 260).

Electronic devices 201 and 260 optionally include one or more image sensors 206A and 206B, respectively. The one or more image sensors 206A, 206B optionally include one or more visible light image sensors, such as charged coupled device (CCD) sensors, and/or complementary metal-oxide-semiconductor (CMOS) sensors operable to obtain images of physical objects from the real-world environment. The one or more image sensors 206A, 206B also optionally include one or more infrared (IR) sensors, such as a passive or an active IR sensor, for detecting infrared light from the real-world environment. For example, an active IR sensor includes an IR emitter for emitting infrared light into the real-world environment. The one or more image sensors 206A, 206B also optionally include one or more cameras configured to capture movement of physical objects in the real-world environment. The one or more image sensors 206A, 206B also optionally include one or more depth sensors configured to detect the distance of physical objects from electronic device 201, 260. In some examples, information from one or more depth sensors can allow the device to identify and differentiate objects in the real-world environment from other objects in the real-world environment. In some examples, one or more depth sensors can allow the device to determine the texture and/or topography of objects in the real-world environment. In some examples, the one or more image sensors 206A or 206B are included in an electronic device different from the electronic devices 201 and/or 260. For example, the one or more image sensors 206A, 206B are in communication with the electronic device 201, 260, but are not integrated with the electronic device 201, 260 (e.g., within a housing of the electronic device 201, 260). Particularly, in some examples, the one or more cameras of the one or more image sensors 206A, 206B are integrated with and/or coupled to one or more separate devices from the electronic devices 201 and/or 260 (e.g., but are in communication with the electronic devices 201 and/or 260), such as one or more input and/or output devices (e.g., one or more speakers and/or one or more microphones, such as earphones or headphones) that include the one or more image sensors 206A, 206B. In some examples, electronic device 201 or electronic device 260 corresponds to a head-worn speaker (e.g., headphones or earbuds). In such instances, the electronic device 201 or the electronic device 260 is equipped with a subset of the other components illustrated in FIGs. 2A and 2B and described herein. In some such examples, the electronic device 201 or the electronic device 260 is equipped with one or more image sensors 206A, 206B, the one or more motion and/or orientations sensors 210A, 210B, and/or speakers 216A, 216B.

In some examples, electronic device 201, 260 uses CCD sensors, event cameras, and depth sensors in combination to detect the physical environment around electronic device 201, 260. In some examples, the one or more image sensors 206A, 206B include a first image sensor and a second image sensor. The first image sensor and the second image sensor work in tandem and are optionally configured to capture different information of physical objects in the real-world environment. In some examples, the first image sensor is a visible light image sensor, and the second image sensor is a depth sensor. In some examples, electronic device 201, 260 uses the one or more image sensors 206A, 206B to detect the position and orientation of electronic device 201, 260 and/or the one or more display generation components 214A, 214B in the real-world environment. For example, electronic device 201, 260 uses the one or more image sensors 206A, 206B to track the position and orientation of the one or more display generation components 214A, 214B relative to one or more fixed objects in the real-world environment.

In some examples, electronic devices 201 and 260 include one or more microphones 213A and 213B, respectively, or other audio sensors. Electronic device 201, 260 optionally uses the one or more microphones 213A, 213B to detect sound from the user and/or the real-world environment of the user. In some examples, the one or more microphones 213A, 213B include an array of microphones (e.g., a plurality of microphones) that optionally operate in tandem, such as to identify ambient noise or to locate the source of sound in space of the real-world environment.

Electronic devices 201 and 260 include one or more location sensors 204A and 204B, respectively, for detecting a location of electronic device 201 and/or the one or more display generation components 214A and a location of electronic device 260 and/or the one or more display generation components 214B, respectively. For example, the one or more location sensors 204A, 204B can include a global positioning system (GPS) receiver that receives data from one or more satellites and allows electronic device 201, 260 to determine the absolute position of the electronic device in the physical world.

Electronic devices 201 and 260 include one or more orientation sensors 210A and 210B, respectively, for detecting orientation and/or movement of electronic device 201 and/or the one or more display generation components 214A and orientation and/or movement of electronic device 260 and/or the one or more display generation components 214B, respectively. For example, electronic device 201, 260 uses the one or more orientation sensors 210A, 210B to track changes in the position and/or orientation of electronic device 201, 260 and/or the one or more display generation components 214A, 214B, such as with respect to physical objects in the real-world environment. The one or more orientation sensors 210A, 210B optionally include one or more gyroscopes and/or one or more accelerometers.

Electronic device 201 includes one or more hand tracking sensors 202 and/or one or more eye tracking sensors 212, in some examples. It is understood, that although referred to as hand tracking or eye tracking sensors, that electronic device 201 additionally or alternatively optionally includes one or more other body tracking sensors, such as one or more leg, one or more torso and/or one or more head tracking sensors. The one or more hand tracking sensors 202 are configured to track the position and/or location of one or more portions of the user's hands, and/or motions of one or more portions of the user's hands with respect to the three-dimensional environment, relative to the one or more display generation components 214A, and/or relative to another defined coordinate system. The one or more eye tracking sensors 212 are configured to track the position and movement of a user's gaze (e.g., a user's attention, including eyes, face, or head, more generally) with respect to the real-world or three-dimensional environment and/or relative to the one or more display generation components 214A. In some examples, the one or more hand tracking sensors 202 and/or the one or more eye tracking sensors 212 are implemented together with the one or more display generation components 214A. In some examples, the one or more hand tracking sensors 202 and/or the one or more eye tracking sensors 212 are implemented separate from the one or more display generation components 214A. In some examples, electronic device 201 alternatively does not include the one or more hand tracking sensors 202 and/or the one or more eye tracking sensors 212. In some such examples, the one or more display generation components 214A may be utilized by the electronic device 260 to provide a three-dimensional environment and the electronic device 260 may utilize input and other data gathered via the other one or more sensors (e.g., the one or more location sensors 204A, the one or more image sensors 206A, the one or more touch-sensitive surfaces 209A, the one or more motion and/or orientation sensors 210A, and/or the one or more microphones 213A or other audio sensors) of the electronic device 201 as input and data that is processed by the one or more processors 218B of the electronic device 260. Additionally or alternatively, electronic device 260 optionally does not include other components shown in FIG. 2B, such as the one or more location sensors 204B, the one or more image sensors 206B, the one or more touch-sensitive surfaces 209B, etc. In some such examples, the one or more display generation components 214A may be utilized by the electronic device 260 to provide a three-dimensional environment and the electronic device 260 may utilize input and other data gathered via the one or more motion and/or orientation sensors 210A (and/or the one or more microphones 213A) of the electronic device 201 as input.

In some examples, the one or more hand tracking sensors 202 (and/or other body tracking sensors, such as leg, torso and/or head tracking sensors) can use the one or more image sensors 206 (e.g., one or more IR cameras, 3D cameras, depth cameras, etc.) that capture three-dimensional information from the real-world including one or more body parts (e.g., hands, legs, or torso of a human user). In some examples, the hands can be resolved with sufficient resolution to distinguish fingers and their respective positions. In some examples, the one or more image sensors 206A are positioned relative to the user to define a field of view of the one or more image sensors 206A and an interaction space in which finger/hand position, orientation and/or movement captured by the image sensors are used as inputs (e.g., to distinguish from a user's resting hand or other hands of other persons in the real-world environment). Tracking the fingers/hands for input (e.g., gestures, touch, tap, etc.) can be advantageous in that it does not require the user to touch, hold or wear any sort of beacon, sensor, or other marker.

In some examples, the one or more eye tracking sensors 212 include at least one eye tracking camera (e.g., IR cameras) and/or illumination sources (e.g., IR light sources, such as LEDs) that emit light towards a user's eyes. The eye tracking cameras may be pointed towards a user's eyes to receive reflected IR light from the light sources directly or indirectly from the eyes. In some examples, both eyes are tracked separately by respective eye tracking cameras and illumination sources, and a focus/gaze can be determined from tracking both eyes. In some examples, one eye (e.g., a dominant eye) is tracked by one or more respective eye tracking cameras/illumination sources.

Electronic devices 201 and 260 are not limited to the components and configuration of FIGs. 2A-2B, but can include fewer, other, or additional components in multiple configurations. In some examples, electronic device 201 and/or electronic device 260 can each be implemented between multiple electronic devices (e.g., as a system). In some such examples, each of (or more of) the electronic devices may include one or more of the same components discussed above, such as various sensors, one or more display generation components, one or more speakers, one or more processors, one or more memories, and/or communication circuitry. A person or persons using electronic device 201 and/or electronic device 260, is optionally referred to herein as a user or users of the device.

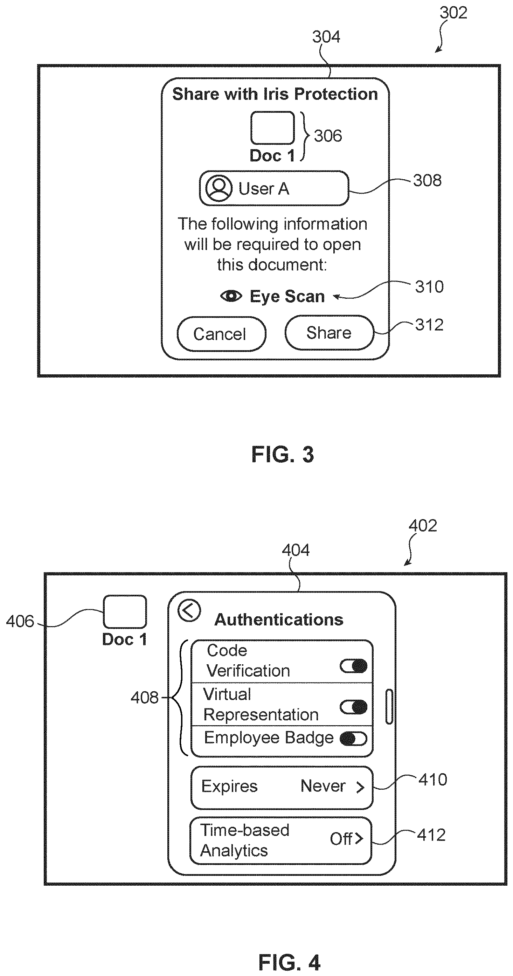

Attention is now directed towards examples of authenticating a user to access protected content. For example, secured content can be transmitted from a sender device to a receiver electronic device (e.g., electronic device 201). In one or more examples, the sender device includes the same or similar components, with the same or similar respective capabilities, as the electronic device described in FIG. 2. In some examples, one or more authentication options can be selected by a user of the sender device. For example, in FIG. 3, a display 302 of a sender device is shown. The sender device can be a mobile device, a laptop, a desktop, a head-mounted display device, or any electronic device described herein.

Display 302 can present a virtual window 304 that optionally includes a secured content indicator 306 (e.g., information about the secured content, such as a title, a glyph/icon representing the document type, etc.), one or more recipients 308 (e.g., User A), one or more authentication options 310, and one or more user interface buttons 312 to activate or cancel sharing of secured content.

The secured content indicator 306 can be associated with secured content that is being transmitted from the sender device to the receiver electronic device. In some examples, the secured content can be a document, an image, a video, or other content of the like. In some examples, the secured content can be editable by a user of the receiver electronic device (e.g., electronic device 201). For example, a user of the receiver electronic device can receive an executable document that requires a signature from the user of the receiver electronic device. Accordingly, in such an example, once the user of the receiver electronic device obtains access to the executable document, the user of the receiver electronic device will be able to add a signature (e.g., an electronic signature) to the executable document.

In some examples, the secured content indicator 306 can include an emblem that represents the content of the secured content. For example, the secured content indicator 306 can be a play button emblem, indicating that the secured content includes a video. In some examples, the secured content indicator 306 can be interactive. For example, the secured content indicator 306 can be activated by a selection (e.g., a click or press) from the user of the sender electronic device. Once activated, the user of the sender electronic device can be prompted to select another file. Additionally, or alternatively, once activated, a virtual window, different than virtual window 304, including additional details (e.g., file size, last date modified, etc.) associated with the secured content can be displayed on the display 302.

The virtual window 304 can include a recipient 308. In some examples, the recipient 308 can be a known user of the receiver electronic device. In some examples, the recipient 308 corresponds to a suggested recipient, such as a user belonging to a contact list of the sender device (e.g., a favorite contact, a recently interacted with contact, a new contact, etc. within a contact list of a communication application, a messaging application, an email application, a social media application, etc.). The recipient 308 can be manually input to the sender electronic device (e.g., selected from a contact list and/or manually input via text insertion by the user of the sender electronic device). In some examples, the intended recipient cannot be the person using the receiving device. In one or more examples, the recipient 308 can be activated by a selection (e.g., a click or press) from the user of the sender electronic device. Once activated, the user of the sender electronic device can be prompted to select another recipient from a contact list. In some examples, once activated, the user of the sender electronic device can be prompted to manually input information associated with a recipient.

To maintain the security of the secured content, secured content includes one or more authentication options 310. In some examples, a device or user-defined default authentication option 310 is presented. In some examples, the sender can select one or more authentication options 310 that the user of the receiver electronic device must perform before access to the secured content is granted. For example, activating authentication option (e.g., via a press, tap, or click) can cause the sender electronic device to close the virtual window 304 and open virtual window 404 as described below. Further, the one or more authentication options 310 will be discussed in further detail below. Alternatively, in some examples, the receiver can select from one or more authentication option 310 via which the receiver is authenticated by the receiver electronic device before obtaining access to the secured content.

One or more user interface buttons 312 can be displayed in the virtual window 304. In one or more examples, the one or more user interface buttons 312 can include a "share" button. The activation of the "share" button can initiate the transmission of the secured content from the sender device to the receiver electronic device. In some examples, the one or more user interface buttons 312 can include a "cancel" button. Activation of the cancel button can cause the virtual window 304 to close on the display 302. Further, activation of the cancel button can forgo sending the secured content to the receiver electronic device.

FIG. 4 illustrates an exemplary sender electronic device according to some examples of the disclosure. As shown in FIG. 4, a display 402 of the sender electronic device can include (e.g., can display) a virtual window 404 and a secured content indicator 406. The virtual window 404 and secured content indicator 406 can be any virtual window and secured content indicator, respectively, as described herein. The virtual window 404 can include one or more authentication options 408 and an expiration option 410. As shown in FIG. 4, the one or more authentication options 408 can include toggle sliders that when selected (e.g., toggled to the right), cause the one or more authentication options to be active. In some examples, the authentications options 408 can include a radial menu, a drop-down menu, a carousel of options, or the like. For example, in FIG. 4, the one or more authentication options 408 corresponding to code verification and virtual representation image verification can be active. Once the secured content is transmitted to the receiver electronic device, a user of the receiver electronic device must satisfy the respective authentication requirements associated with the active one or more authentication options (e.g., code verification authentication and virtual representation image verification) to obtain access to the secured content. The expiration option 410 can determine how long the user of the receiver electronic device can be able to access the secured content. In some examples, the expiration option 410 can indicate that the access to the secured content never expires. In another example, the expiration option 410 can indicate that the access to the secured content expires within one hour, one day, one week, one month, etc. The expiration option 410 can be linked to a respective application (e.g., a calendar application, a reminders application, a notes application, an email application, etc.) on the sender electronic device and can automatically populate a respective deadline associated with the expiration option 410 in the respective application. It should be noted that the expiration option 410 indicates how long the user of the receiver electronic device can access the secured content, but the user of the receiver electronic device still must satisfy the selected authentication requirements associated with the one or more authentication options 408 to gain access to the secured content. In one or more examples, a time-based analytics option 412 is optionally selected to monitor time-based actions associated with the secured content, as described in further detail below.

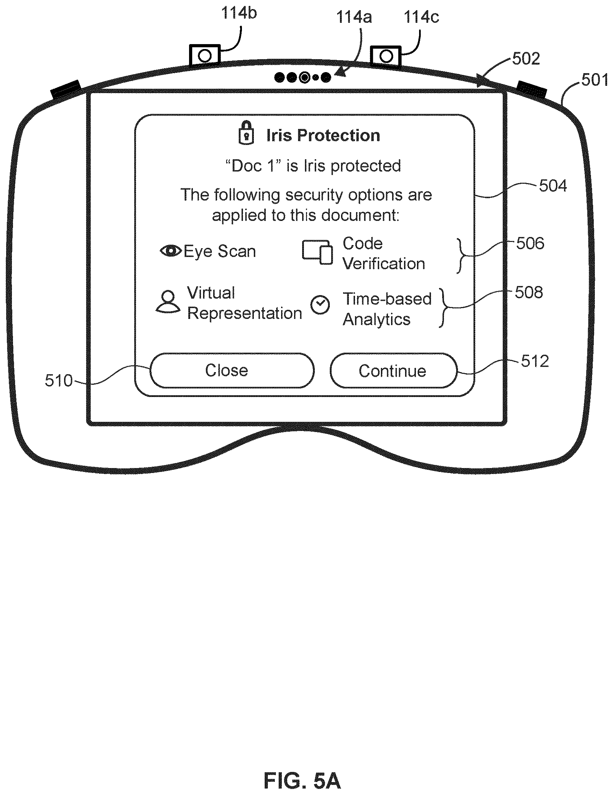

FIG. 5A illustrates an electronic device 501 having a display 502 that is configured to display virtual window 504. The virtual window 504 can be displayed in a three-dimensional (3D) environment and include one or more authentication options 506 and one or more user interface buttons 510 and 512. It should be noted that the electronic device(s) illustrated in FIGs. 5A-14 optionally correspond to the receiving device as described above. The one or more authentication options 506 can include an eye scan, code verification authentication, a virtual representation image verification, or the like. In some examples, the one or more authentication options 506 can be selected by a user of a sender device as described herein. In some examples, the virtual window 504 can include an indication that time-based analytics 508 associated with the secured content will be monitored. The time-based analytics can include time stamps associated with various actions performed on the secured content. For example, the time-based analytics 508 can include an indication of when access is granted to the secured content, when the secured content is no longer being accessed by the user of the electronic device 501, when modifications are made to the secured content, or things of the like. The time-based analytics 508 can be transmitted back to the sender device in real-time to provide live updates on the secured content. In some examples, the user of the electronic device 501 can have access revoked based at least on the time-based analytics 508. The time-based analytics 508 can indicate that over 24 hours has elapsed since the user of the electronic device 501 gained access to the secured content, and in response, the sender device can revoke access to secured content by the user of the electronic device 501. The time-based analytics 508 can include respective time stamps corresponding to one or more modifications to the secured content. For example, the secured content can be an editable portable document format (PDF) file. The time-based analytics 508 associated with the editable PDF file can have a time stamp corresponding to the user of the electronic device 501 editing a portion of text included in the PDF file. It should be noted that the user of the electronic device 501 can optionally opt-in to sharing the time-based analytics with the sender electronic device. However, in some examples, if the sender electronic device optionally selects to monitor time-based analytics, then the user of the electronic device 501 may not opt-out of sharing the time-based analytics with the sender electronic device.

Still referring to the virtual window 504, one or more user interface buttons 510 and 512 can be displayed in the virtual window 504. The one or more user interface buttons 510 and 512 can cause one or more changes in the display of the virtual window 504 via the display 502. For example, the user interface button 510 can include a "close" button. The "close" button can cause the virtual window 504 to close on the display 502. Closing of the virtual window 504 can also cause the recipient device to send an indication to the sender electronic device that the secured content has not been accessed. Further, in FIG. 5A, the user interface button 512 can include a "continue" button. Selection of the "continue" button can initiate an authentication process corresponding to the one or more selected authentication options 506. For example, selection of the "continue" button can close the virtual window 504 and prompt the user of the electronic device 501 with one or more authentication prompt windows, as discussed in further detail herein. The one or more authentication prompt windows corresponding to the one or more authentication options 506 can be displayed in any order. In some examples, audio and/or haptic prompts are initiated instead of the one or more authentication prompt windows being displayed. It should be noted that the audio and/or haptic prompts may be associated with a respective option of the one or more authentication options 506 without having a visual indication of the respective option of the one or more authentication options 506. It should be noted that the one or more user interface buttons 510 and 512 can be selected via one or more input devices and/or one or more gestures performed by a hand of the user of the electronic device 501.

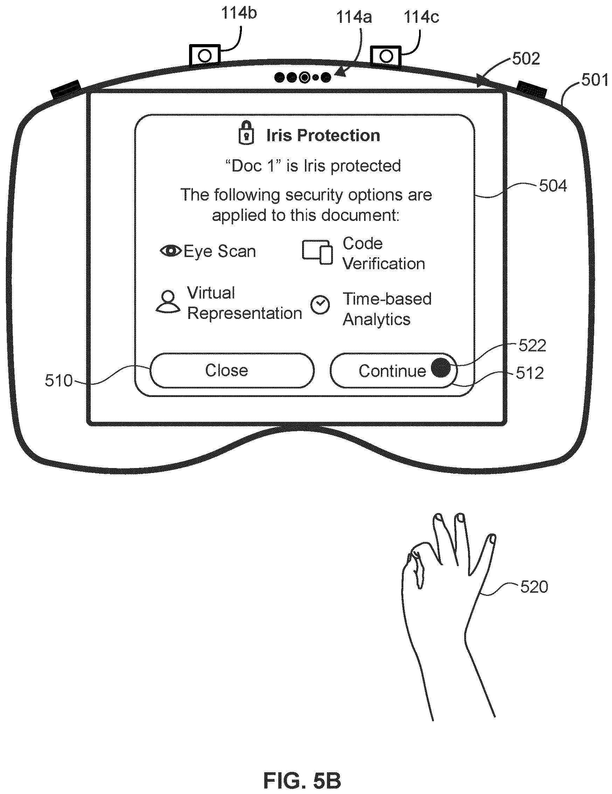

FIG. 5B illustrates a hand of a user of electronic device 501 performing one or more gestures that select one or more options on the display 502 via the hand 520 performing a "pinch" gesture as shown in FIG. 5A. It should be noted that the electronic device 501 can have one or more cameras configured to monitor one or more gestures performed by the hand 520. In some examples, a gaze location 522 of one or more eyes of the user of the electronic device 501 can indicate a location on the display 502 that the gesture performed by the hand 520 can be directed to. It should be noted that one or more cameras of the electronic device 501 can be configured perform eye tracking of the one or more eyes of the user to set the gaze location 522, as similarly described above with reference to FIG. 2. In some examples, the gaze location 522 can indicate that the one or more eyes can be focusing on a portion of the virtual window 504 that has the "continue" option as shown in FIG. 5B. Accordingly, in some examples, in response to detecting the hand 520 performing the pinch gesture while the gaze location 522 is directed to the user interface button, the user interface button can be selected by the electronic device 501. Further, as discussed herein, it should be noted that the electronic device 501 can detect the hand 520 perform one or more gestures (e.g., air pinch gestures, air tap or touch gestures, air swipe gestures, air toss gestures, etc.) directed to one or more additional or alternative virtual objects (e.g., different from the virtual window 504) in the 3D environment to perform corresponding operations involving the virtual objects displayed via the display 502.

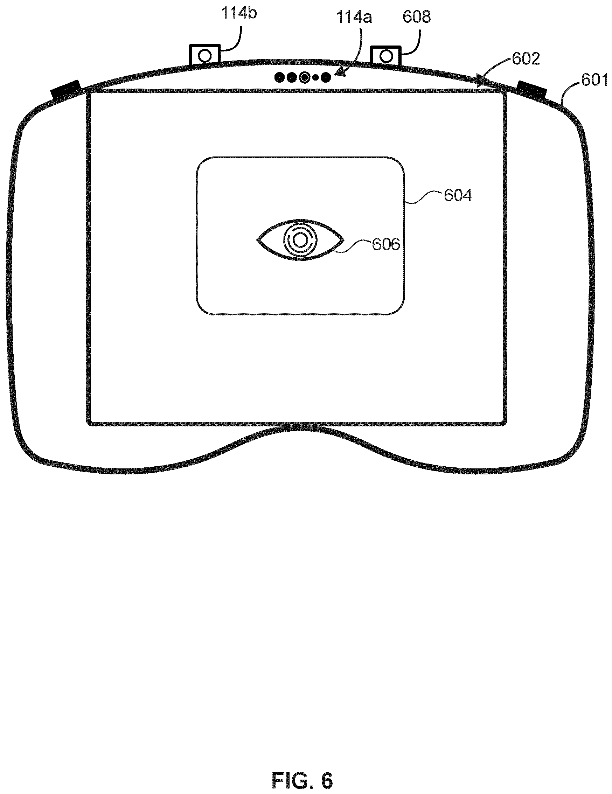

FIG. 6 illustrates a display 602 displaying a digital prompt 604 associated with one or more authentication options described herein. The digital prompt 604 can include an eye scan indicator 606. The eye scan indicator 606 can include a visual representation of the associated authentication. For example, the eye scan indicator 606 can be associated with the eye scan authentication option described above. In some examples, the eye scan indicator 606 can serve as a visual instruction to the user of an electronic device 601 to prepare to have their one or more eyes scanned. In some examples, when the display 602 displays the digital prompt 604 (e.g., eye scan prompt), one or more cameras 608 of the electronic device 601 can focus on the one or more eyes of the user of the electronic device 601 to perform the eye scan. In some examples, in accordance with determining that the eye scan is successful, the eye scan indicator 606 can change in color (e.g., from a first color to a second color, such as from red to blue) to confirm to the user of the electronic device 601 that the eye scan was successful. In some examples, the eye scan indicator 606 can disappear from the display 602 and a check mark indicator can appear to confirm to the user of the electronic device 601 that the eye scan was successful.

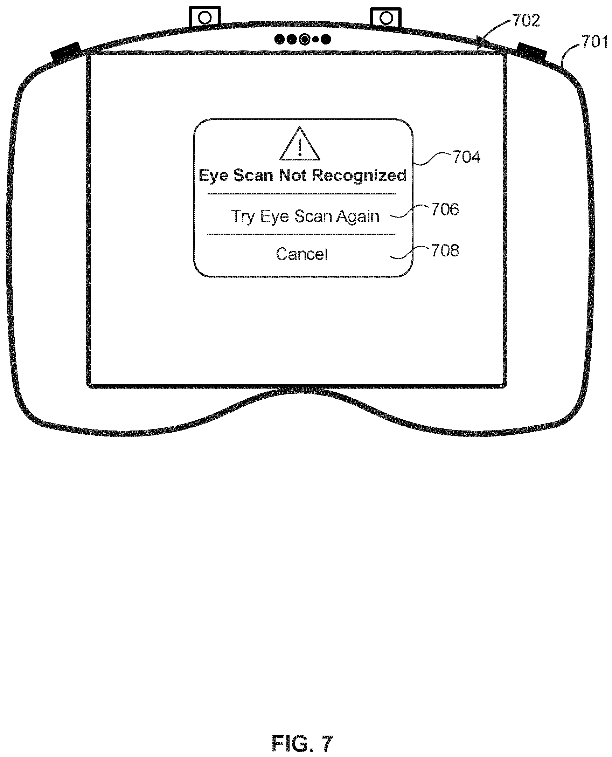

FIG. 7 illustrates a display 702 displaying a failure window 704. In some examples, the display 702 can display the failure window 704 when an eye scan of a user of the electronic device 701 is unsuccessful. In another example, the display 702 can display the failure window if the electronic device loses connectivity to a wireless network. In another example, the display 702 can display the failure window if the sender electronic device revokes access to the secured content while the user of the electronic device 701 is attempting to provide one or more authentication inputs. The failure window 704 can include selectable options (e.g., user interface buttons), such as a retry option 706 and a cancel option 708. In some examples, selection of the retry option 706 can cause the display 702 to display the eye scan prompt of FIG. 6 described above again. In some examples, after a second (or third or fourth) attempt to perform the eye scan of the user of the electronic device, the electronic device 701 forgoes displaying the failure window 704 and forgoes the authentication process altogether. In one or more examples, the display 702 displays a virtual window and/or a notification that the authentication failed. In some examples, the display 702 displays another authentication prompt (e.g., virtual representation image verification) instead of retrying the eye scan. In some examples, selection of the cancel option 708 can forgo proceeding with the authentication process. It should be noted that the user of the electronic device 701 can perform one or more gestures with their hand to select the retry option 706 or the cancel option 708.

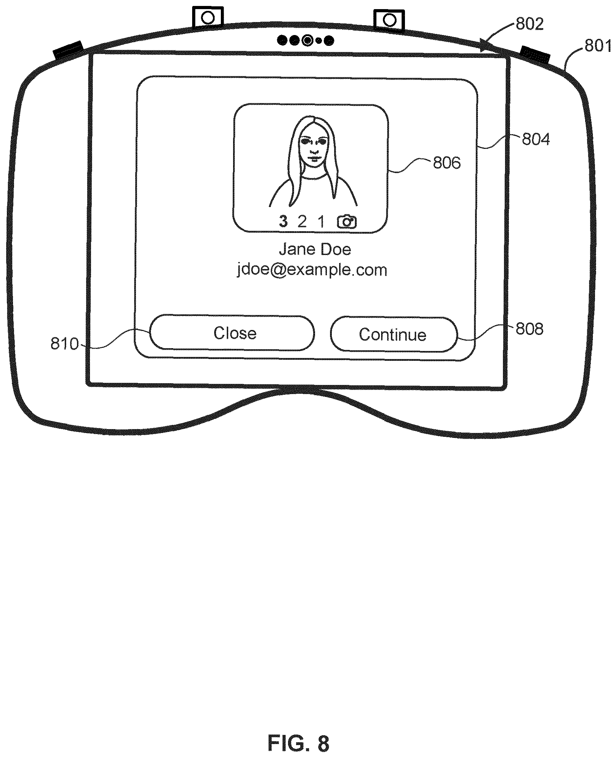

FIG. 8 illustrates a display 802 displaying a virtual representation image verification prompt 804. In some examples, the virtual representation image verification prompt 804 can include a persona window 806, a user interface button 810, and user interface button 808. In some examples, the persona window 806 can include a live feed of a persona of the electronic device 801. The persona can be a virtual representation of the user of the electronic device 801, such an avatar corresponding to the user of the electronic device 801, an image of the user of the electronic device 801, a video feed of the user of the electronic device 801, etc. In some examples, the persona corresponds to a virtual representation of the user that is previously captured and/or generated at the electronic device 801 and stored at the electronic device 801. For example, the electronic device 801 can only have one virtual representation of the user stored on the electronic device 801. In some examples, the persona of the user of the electronic device 801 is captured and/or generated at the electronic device 801 during the authentication process. In some examples, the persona window 806 can have a countdown prior to taking a snapshot of the persona (e.g., a virtual representation image verification). Once the virtual representation image verification is obtained, selection of the user interface button 808 can cause the electronic device 801 to transmit the virtual representation image verification to the sender electronic device. In some examples, selection of the user interface button 810 can forgo proceeding with the authentication process altogether. In some examples, after a second (or third or fourth) attempt to obtain the virtual representation image verification of the user of the electronic device 801, and verification of the virtual representation image verification is still unsuccessful, the electronic device 801 can forgo the authentication process altogether. It should be noted that the user of the electronic device 801 can perform one or more gestures with their hand to select the user interface button 808 and the user interface button 810.

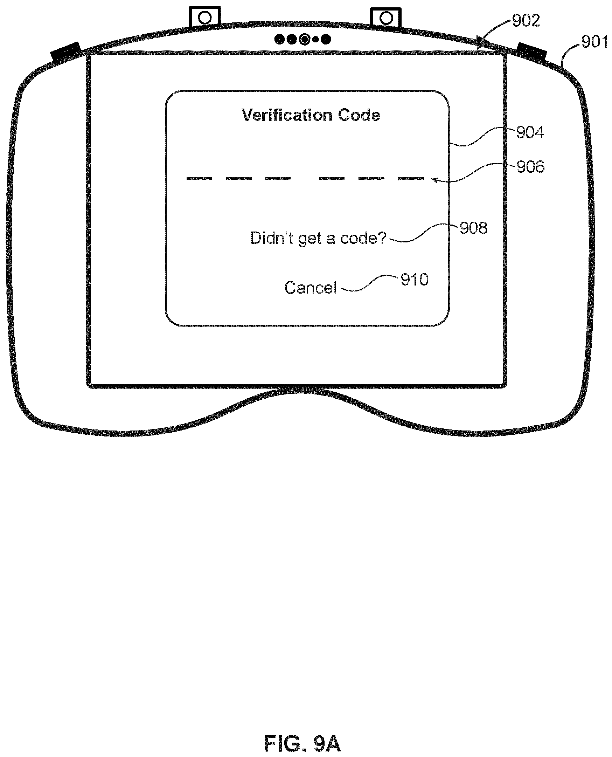

FIG. 9A illustrates a display 902 displaying a code verification prompt 904. In some examples, the code verification prompt 904 can include one or more character fields 906, a resend option 908, and a cancel option 910. The one or more character fields 906 can be empty until a verification code is provided. For example, the one or more character fields 906 can be empty until the user of the electronic device 901 inputs one or more characters of a verification code into their respective fields in the one or more character fields 906. The user of the electronic device 901 can obtain the verification code from an additional electronic device associated with the user of the electronic device 901. For example, the additional device can be a mobile phone or a tablet that is registered to the user of the electronic device 901. The additional device associated with the user of the electronic device 901 can display the verification code. In accordance with the additional device displaying the verification code, the user of the electronic device 901 can input the verification code into the electronic device by performing one or more gestures with their hand to select the one or more characters corresponding to the characters of the verification code (e.g., via a digital keyboard displayed via the display 902). In some examples, the user of the electronic device 901 can input the verification code into the additional device, which can be transmit an indication to the electronic device 901 that the verification code has been inputted (e.g., and verified). In some examples, if the verification code is not received on the additional device associated with the user of the electronic device 901, the user of the electronic device 901 can select the resend option 908. Selection of the resend option can provide the user of the electronic device 901 the option to send an updated verification code to a device different than the additional device, or through a different medium (e.g., a phone call, an email). It should be noted, in response to the user selecting the resend option 908, the previously-transmitted verification code is not accepted as an authentication input into the electronic device 901. In some examples, after a second (or third or fourth) attempt to perform input the verification code into the electronic device 901, and verification of the verification code is still unsuccessful, the electronic device 901 can forgo the authentication process altogether. In some examples, selection of the cancel option 910 can cause the electronic device 901 to forgo proceeding with the authentication process.

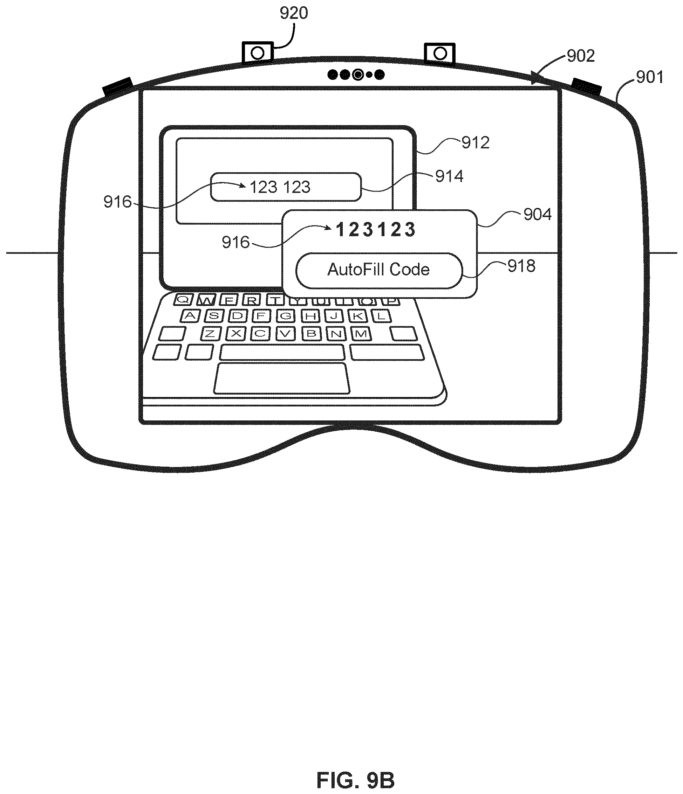

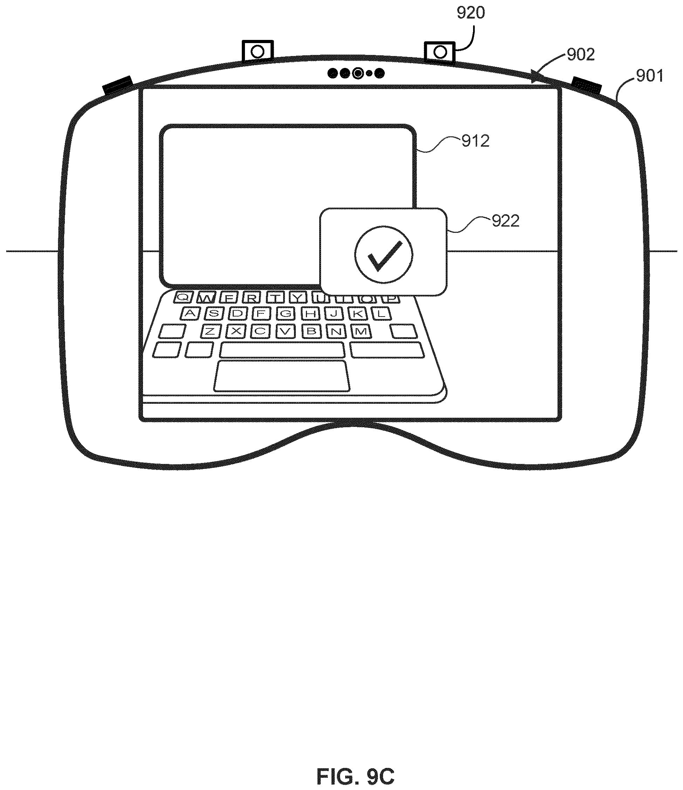

FIG. 9B illustrates a display 902 displaying a code verification prompt 904. In some examples, the display 902 presents a three-dimensional (3D) environment surrounding the electronic device 901.For example, as described above, an additional electronic device 912 associated with the user of the electronic device 901 is presented on the display 902. In some examples, the additional electronic device 912 can include a display 914 of the additional device that displays a verification code 916. For example, in accordance with the display 902 displaying the code verification prompt 904, the display 914 of the additional device can display the verification code 916. In response to the display 914 of the additional device displaying the verification code 916, the user of the electronic device 901 can input the verification code 916 into the electronic device 901 using methods described herein. In some examples, the user of the electronic device 901 can select an autofill option 918. For example, in response to selecting the autofill option 918, one or more cameras 920 of the electronic device 901 can obtain an image of the display 914 of the additional device, and perform optical character recognition, or any other suitable character recognition, to extract the verification code 916 from the obtained image. In accordance with extracting the verification code 916, the electronic device 901 can automatically input the verification code 916 into the code verification prompt 904. Once the verification code 916 is correctly input into the electronic device 901, the display 902 can display a confirmation notification 922, as shown in FIG. 9C. In some examples, as shown in FIG. 9C, the confirmation notification 922 can include a check mark indication that the verification code 916 is correct. In one or more examples, the verification code 916 can only be visible by one or more cameras 920 of the electronic device 901. For example, the verification code 916 displayed on the display 914 of the additional device is not visible to individuals present in the three-dimensional environment surrounding the electronic device 901 and the additional electronic device 912.

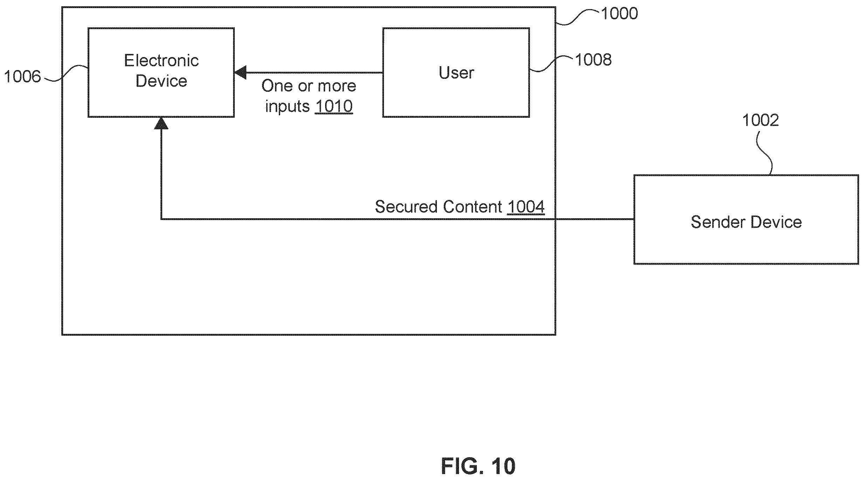

Additionally or alternatively, in some examples, access to secured content can be restricted geographically. Optionally, access to secured content is granted so long as the electronic device remains within trusted location boundaries. Optionally, access to secured content is available using less restrictive authorization. FIG. 10 illustrates a user 1008 providing one or more inputs 1010 into an electronic device 1006 for verification within a trusted location boundary 1000. In some examples, the electronic device 1006 can be connected to a wired or wireless network associated with the trusted location. This connection can be indicated by a media access control (MAC) address and/or an internet protocol (IP) address associated with the electronic device 1006. In some examples, locations services of the electronic device 1006 can be enabled such that the sender electronic device can confirm that the electronic device is within the trusted location. In some examples, the trusted location boundary 1000 can be a physical location. For example, the trusted location boundary 1000 can be a building associated with a trusted entity (e.g., a company, a school, a workplace, a home, etc.). In some examples, the trusted boundary can be a plurality of buildings associated with a trusted entity. It should be noted that the trusted entity can be verified through a verification process prior to the initiation of the authentication process described above, such that locations associated with the trusted entity can have reduced verification requirements for devices that are within and/or proximate to the locations associated with the trusted entity. In some examples, a sender electronic device 1002 can transmit secured content 1004 to an electronic device 1006 located within the trusted location boundary 1000. For example, the sender electronic device 1002 can transmit the secured content 1004 with one or more selected authentication options, as described above in FIGs. 3-4, while the recipient device is located within the trusted location boundary 1000. In some examples, the secured content 1004 can include one or more authentication requirements for gaining access, as described herein. In some examples, a user 1008 associated with the electronic device 1006 can provide one or more inputs 1010 to satisfy the one or more authentication requirements as described herein. In some examples, access to the secured content is revoked once the electronic device 1006 is not within the trusted location boundary 1000. In some examples, the user 1008 can be a part of the trusted entity associated with the trusted location boundary 1000. For example, the user 1008 can be an employee or an employer associated with the trusted entity. In some examples, a number of the one or more authentication requirements can be smaller than a number of authentication requirements if the electronic device 1006 and the user 1008 were outside of the trusted location boundary 1000. For example, when the electronic device 1006 is within the trusted location boundary 1000, the one or more authentication methods only include a badge scan and/or a verification code. However, when the electronic device 1006 is outside of the trusted location boundary 1000, the one or more authentication methods include an eye scan, verification code authentication, and virtual representation image authentication.

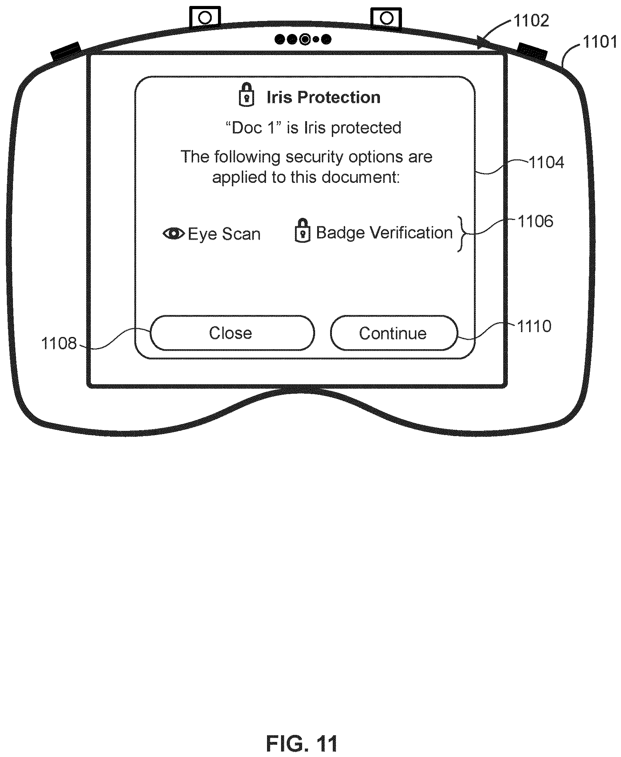

In some examples, within the trusted location boundary, alternative authentication methods are provided. For example, an employee badge can grant access to secured content at a place of employment. FIG. 11 illustrates an electronic device 1101 located within a trusted location having a display 1102 that is configured to display virtual window 1104. For example, the electronic device 1101 is located within the trusted location boundary 1000 of FIG. 10 when secured content is shared with the electronic device 1101, which causes the electronic device 1101 to display the virtual window 1104. The virtual window 1104 can include one or more authentication options 1106 and one or more user interface buttons 1108 and 1110. The one or more authentication options 1106 can include an eye scan, badge verification, or the like. In some examples, the one or more authentication options 1106 can be selected by a user of a sender device as described herein. It should be noted that a number of authentication options 1106 can be smaller than a number of authentication options described in FIG. 5A because the electronic device 1101 is within the trusted location. The one or more user interface buttons 1108 and 1110 can cause one or more changes in the display of the virtual window 1104. For example, the user interface button 1108 can include a "close" button. The "close" button can cause the virtual window 1104 to close (e.g., cease to be displayed) on the display 1102. Closing of the virtual window 1104 can also cause the electronic device 1101 to send an indication to the sender device that the secured content has not been accessed. Further, the user interface button 1110 can include a "continue" button. The "continue" button can be selectable to initiate an authentication process corresponding to the one or more selected authentication options 1106. For example, the "continue" button can be selectable to close the virtual window 1104 and prompt the user of the electronic device 1101 with one or more authentication prompt windows, as discussed in further detail herein. The one or more authentication prompt windows corresponding to the one or more authentication options 1106 can be display in any order. It should be noted that the one or more user interface buttons 1108 and 1110 can be engaged/selected via one or more input devices and/or one or more gestures performed by a hand of the user of the electronic device 1101.

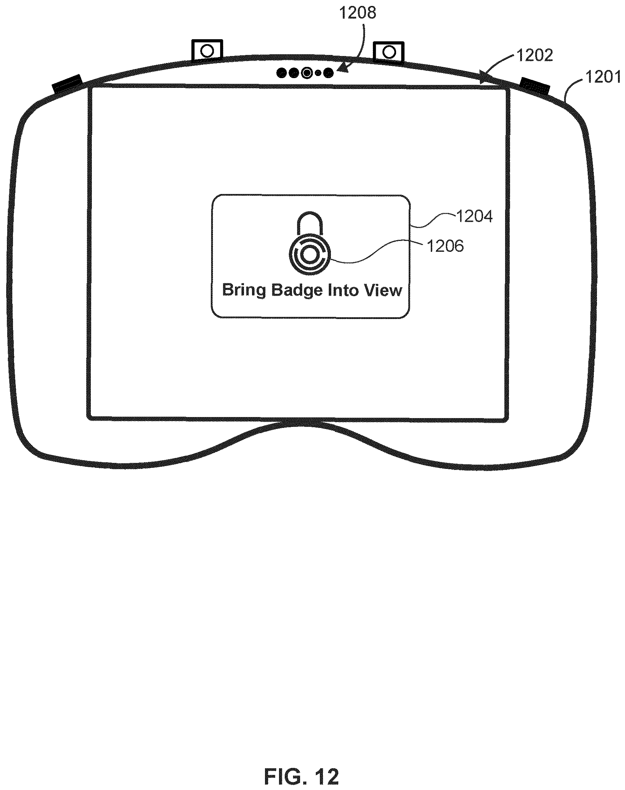

FIG. 12 illustrates a display 1202 displaying a digital prompt 1204 associated with one or more authentication options described herein. The digital prompt 1204 can include a badge scan indicator 1206. The badge scan indicator 1206 can be a visual representation of the associated authentication option. For example, the badge scan indicator 1206 can be associated with the badge scan authentication. The badge scan can prompt the user of the electronic device 1201 to position a badge, associated with the user, in view of one or more cameras of the electronic device 1201, such that one or more cameras can obtain one or more images of the badge. In some examples, the badge functions as and/or provides an indication of confirmation (e.g., proof) that the user is associated with the trusted entity (e.g., is an employee and/or employer of a particular trusted company, business, or other entity). In some examples, the badge scan indicator 1206 can serve as a visual instruction to the user of an electronic device 1201 to prepare to have their badge scanned. In some examples, when the display 1202 displays the digital prompt 1204 (e.g., badge scan prompt), one or more cameras 1208 of the electronic device 1201 can identify a badge of the user of the electronic device 1201 to perform the badge scan, as similarly described below. In some examples, in accordance with determining that the badge scan is successful, the badge scan indicator 1206 can change in color (e.g., from a first color to a second color, such as from red to blue) to confirm to the user of the electronic device 1201 that the badge scan was successful.

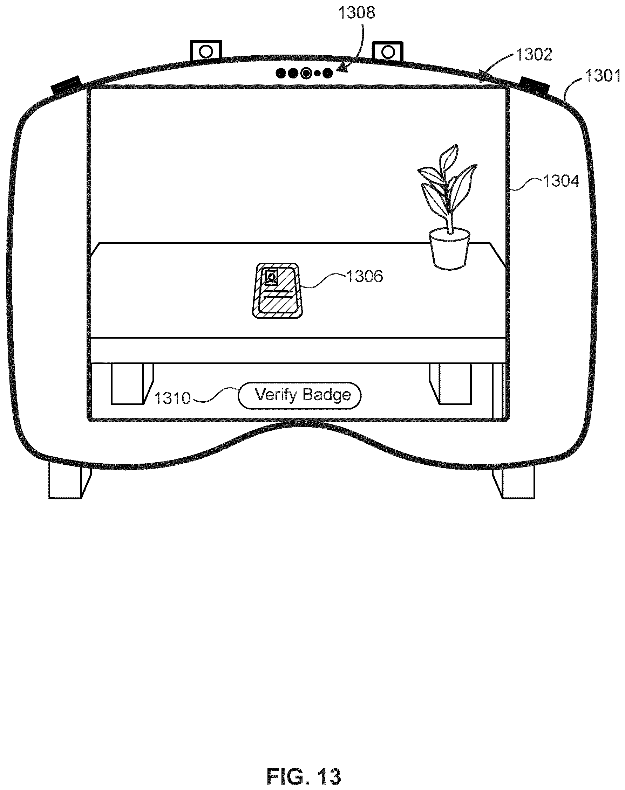

FIG. 13 illustrates a display 1302 presenting an environment passthrough 1304 showing the surroundings of the electronic device 1301. In some examples, the display 1302 can show a badge 1306 associated with a user of the electronic device 1301. For example, the badge 1306 can be within a field of view of the one or more cameras 1308 of the electronic device 1301 while the electronic device is in use. In some examples, the environment passthrough 1304 can be a live view of the surroundings of the electronic device 1301 obtained by the one or more cameras 1308 configured to capture one or more gestures performed by the user of the electronic device 1301. In some examples, as shown in FIG. 13, the display 1302 can show the badge 1306 with a virtual outline and/or virtual shading effect to indicate that the badge 1306 is recognized by the electronic device 1301. In some examples, the user of the electronic device 1301 can select a verify badge option 1310. In response to the user of the electronic device 1301 selecting the verify badge option, the one or more cameras 1308 can obtain one or more images of the badge 1306 for the electronic device 1301 to analyze. For example, the electronic device 1301 can perform object recognition and/or other image processing techniques on the obtained one or more images of the badge 1306 to verify that the badge is associated with the trusted entity discussed above. It should be noted that the electronic device can also authenticate the user of the electronic device 1301 by performing an eye scan (e.g., as similarly illustrated in FIG. 6), prior to performing the badge verification. By performing the eye scan, the electronic device can identify the user of the electronic device 1301. The identification can then be compared to the object recognition performed on the one or more obtained images of the badge 1306. In accordance with a determination that the identification of the user from the eye scan and the object recognition of the badge 1306 match (e.g., the eye scan and the identified badge are associated with the same user), then the badge verification can be determined successful. It should be noted that that the electronic device 1301 can use geolocation to determine that the electronic device is within the trusted location.

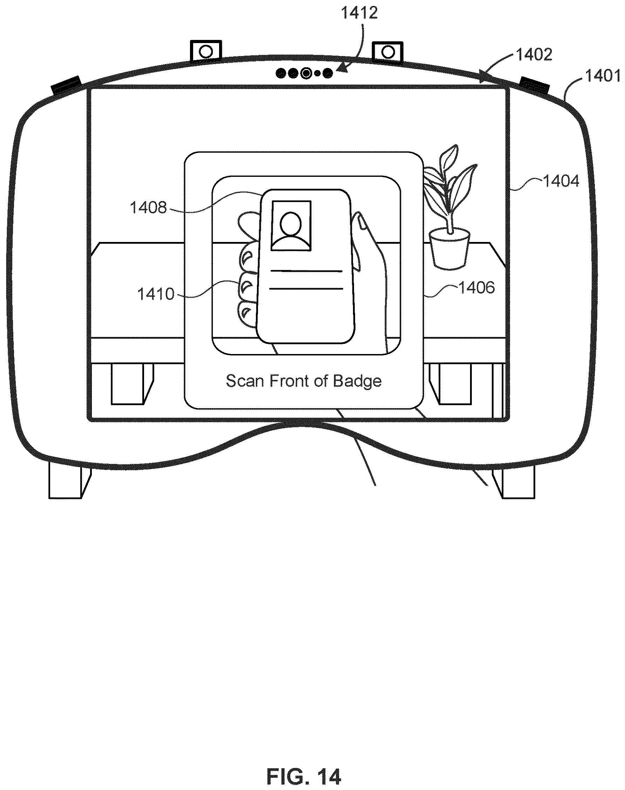

FIG. 14 illustrates a display 1402 presenting an environment passthrough 1404 showing the surroundings of the electronic device 1401. In some examples, the badge 1408 is not in a field of view of the one or more cameras 1412 of the electronic device 1401 and/or is not sufficiently positioned relative to a viewpoint of the one or more cameras 1412 to enable the electronic device 1401 to perform a badge verification, as described in FIG. 13. As such, the display 1402 can display a badge scan window 1406 associated with a user of the electronic device 1401 prompting the user to position their badge in the field of view of the one or more cameras 1412. In FIG. 14, the user of the electronic device 1401 can bring a badge 1408 into view of the one or more cameras 1412, as indicated by the badge scan window 1406, with their hand 1410. Once in view of the one or more cameras 1412 as indicated by the badge scan window 1406, the one or more cameras 1412 can automatically obtain/capture one or images of the badge 1408. In some examples, the one or more cameras 1412 obtain one or more images of the badge 1408 for the electronic device 1301 to perform object recognition on. As described above with reference to FIG. 13, the (e.g., previously performed) identification of the user based on an eye scan performed by the electronic device 1401 can be compared to the object recognition performed on the one or more obtained images of the badge 1408. In accordance with a determination that the identification of the user from the eye scan and the facial recognition of the badge 1408 match, as similarly described above, then the badge verification can be determined to be successful. It should be noted that, after a second (or third or fourth) attempt to successfully perform a badge scan associated the user of the electronic device 1401, and verification of the badge scan is still unsuccessful, the electronic device 1401 can forgo the authentication process altogether. Further, it should be noted that the electronic devices, the environments, and/or inputs described above with reference to FIGs. 3-14 are optionally the same or similar. Moreover, in accordance with the one or more authentication methods being successfully completed, any display described herein can display the secured content.

It should be understood that, although the exemplary user interfaces and user interface elements illustrated in FIGs. 3-14 are described above as being displayed in and/or contained within virtual windows, in some examples, the exemplary user interfaces and user interface elements are provided in additional or alternative virtual objects that are presented by the electronic device 101 in the three-dimensional environments. For example, the user interfaces and/or user interface elements are presented as standalone (e.g., individual) virtual objects that are interactable in the three-dimensional environments, rather than being contained to a virtual window or other container in the three-dimensional environments.

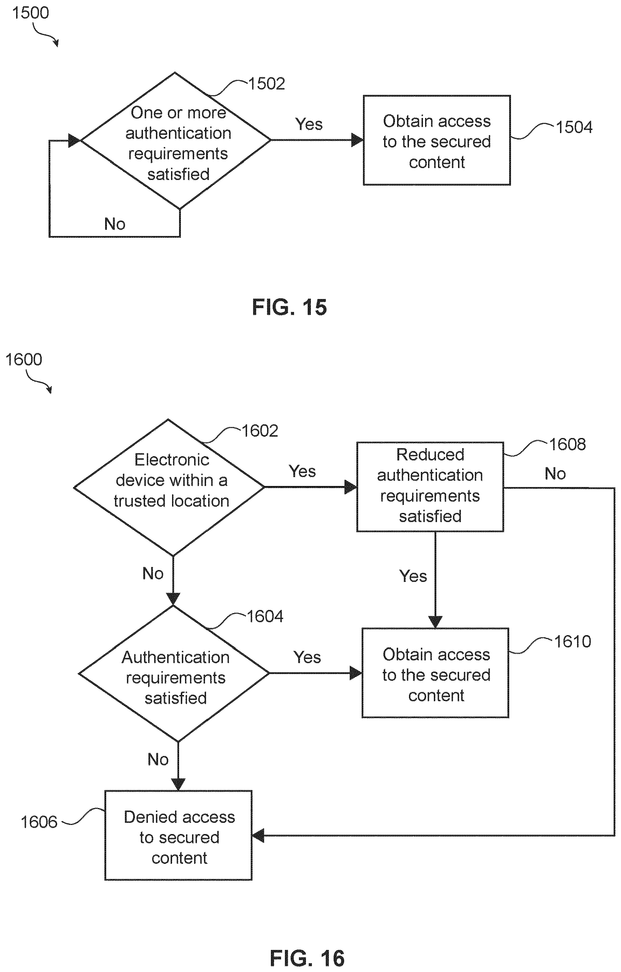

FIG. 15 is a flow diagram illustrating a method 1500 for obtaining access to secured content according to some examples of the disclosure. In some examples, an electronic device can perform method 1500. In some examples, the electronic device is optionally a head-mounted display similar or corresponding to electronic device 201 of FIG. 2 and/or electronic device 101 of FIG. 1. Optionally, one or more operations of the method 1500 are programmed in instructions stored using non-transitory computer readable storage media.

At 1502, the electronic device can determine whether one or more authentication requirements are satisfied. The one or more authentication requirements can include one or more authentication methods being performed as described herein. For example, an authentication requirement of the one or more authentication requirements can include performing an eye scan that verifies the identity of a user of an electronic device. In some examples, if the one or more requirements are not satisfied, the electronic device can repeat step 1502 until the one or more authentication requirements are satisfied. If the one or more authentication requirements are satisfied, then the electronic device can obtain access to the secured content. For example, a user of the electronic device can provide one or more inputs into the electronic device to satisfy the one or more authentication requirements. In response to providing one or more inputs to the electronic device that satisfy the one or more authentication requirements, the user of the electronic device can obtain access to the secured content. It should be noted that the electronic device performing method 1500 can improve upon existing authentication processes and provide improved security for the user sharing the content and/or the user viewing the content, which helps improve user-device interaction and reduces consumption of computing resources.

It is understood that method 1500 is an example and that more, fewer, or different operations can be performed in the same or in a different order. Additionally, the operations in method 1500 described above are, optionally, implemented by running one or more functional modules in an information processing apparatus such as general-purpose processors (e.g., as described with respect to FIG. 2) or application specific chips, and/or by other components of FIG. 2.

FIG. 16 is a flow diagram illustrating a method 1600 for obtaining access to secured content within a trusted location according to some examples of the disclosure. In some examples, an electronic device can perform method 1600. In some examples, the electronic device is optionally a head-mounted display similar or corresponding to electronic device 201 of FIG. 2 and/or electronic device 101 of FIG. 1. Optionally, one or more operations of the method 1600 are programmed in instructions stored using non-transitory computer readable storage media.

At 1602, a sender device can determine whether the electronic device is within a trusted location. In some examples, the sender device can determine whether the electronic device can use geolocation to determine whether the electronic device is within the trusted location. In some examples, the sender device can determine that the electronic device can is not within the trusted location. As such, a user of the electronic device can be required to provide one or more authentication inputs to the electronic device at 1604. If the one or more authentication inputs do not satisfy the one or more authentication requirements, then the user of the electronic device can be denied access to the secured content at 1606. If the one or more authentication inputs satisfy the one or more authentication requirements, then the user of the electronic device can obtain access to the secured content at 1610.

At 1608, the sender device can determine that the electronic device can is within the trusted location. As such, a user of the electronic device can be required to provide one or more reduced authentication inputs to the electronic device at 1608. It should be noted that the one or more reduced authentication inputs can be less than the one or more authentication inputs. If the one or more reduced authentication inputs satisfy the one or more authentication requirements, then the user of the electronic device can obtain access to the secured content at 1610. In some examples, if the one or more reduced authentication inputs do not satisfy the one or more authentication requirements, then the user of the electronic device can be denied access to the secured content at 1606. It should be noted that the electronic device performing method 1600 can improve upon existing authentication processes and provide improved security for the user sharing the content and/or the user viewing the content, which helps improve user-device interaction and reduces consumption of computing resources.

It is understood that method 1600 is an example and that more, fewer, or different operations can be performed in the same or in a different order. Additionally, the operations in method 1600 described above are, optionally, implemented by running one or more functional modules in an information processing apparatus such as general-purpose processors (e.g., as described with respect to FIG. 2) or application specific chips, and/or by other components of FIG. 2.

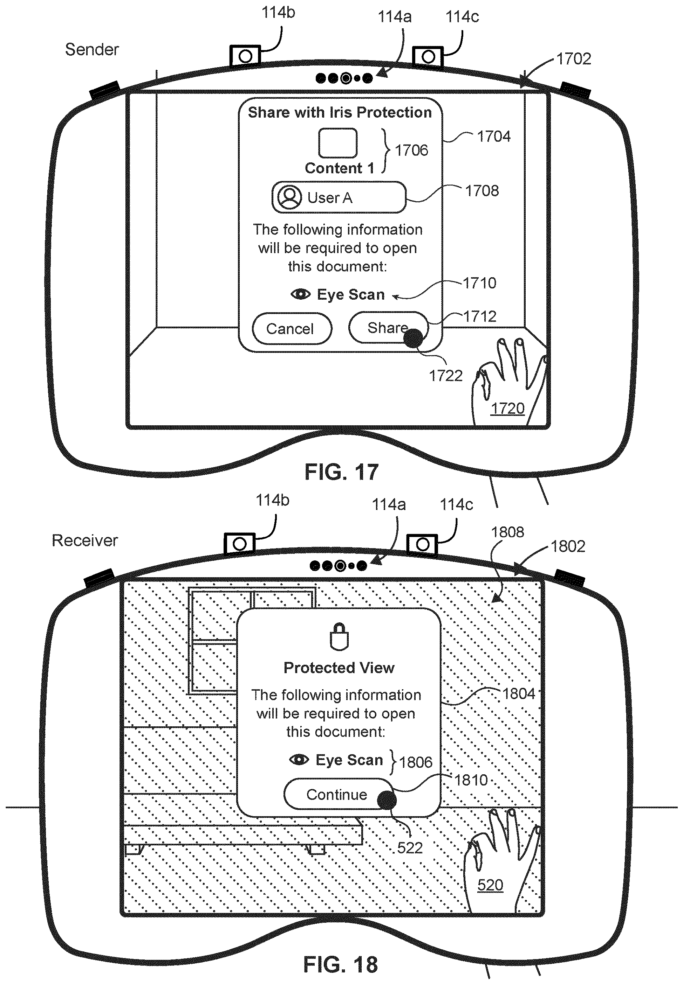

Attention is now directed towards examples of viewing secured content on an electronic device (e.g., a head-mounted display device). For example, secured content can be transmitted from a sender device to a receiver electronic device (e.g., electronic device 201). In one or more examples, the sender device includes the same or similar components, with the same or similar respective capabilities, as the electronic device described in FIG. 2. In some examples, one or more authentication options can be selected by a user of the sender device. For example, as shown in FIG. 17, which illustrates an example of a sender electronic device according to some examples of the disclosure, an exemplary sender device displays, via display 1702, a virtual window 1704 that optionally includes information about the secured content, such as a title, a glyph/icon representing the document type, etc., one or more recipients 1708 (e.g., User A), one or more authentication options 1710 (e.g., an eye scan), and one or more user interface buttons 1712 to initiate or cancel sharing of secured content.

The secured content indicator 1706 can be associated with secured content that is being transmitted from the sender device to the receiver electronic device. In some examples, the secured content can be a document, an image, a video, or other content of the like. In some examples, the secured content can be editable by a user of the receiver electronic device (e.g., electronic device 201). For example, a user of the receiver electronic device can receive a screen recording of a display on the sender electronic device that is available for playback by the user of the receiver electronic device. Accordingly, in such an example, once the user of the receiver electronic device obtains access to the screen recording, the user of the receiver electronic device will be able to provide an input directed to the screen recording to initiate a playback, via a display of the receiver electronic device, of the screen recording of the display on the sender electronic device.

In some examples, the secured content indicator 1706 can include an emblem that represents the content of the secured content. For example, the secured content indicator 1706 can be a play button emblem, indicating that the secured content includes a video. In some examples, the secured content indicator 1706 can be interactive. For example, the secured content indicator 1706 can be activated by a selection (e.g., performing an air gestured directed to the secured content indicator 1706) provided by the user of the sender electronic device. Once activated, the user of the sender electronic device can be prompted to select another file (e.g., another video and/or photo). Additionally, or alternatively, once activated, a virtual window, different than virtual window 1704, including additional details (e.g., file size, last date modified, etc.) associated with the secured content can be displayed on the display 1702.

The virtual window 1704 can include a recipient 1708, as mentioned above. In some examples, the recipient 308 can be a known user of the receiver electronic device. In some examples, the recipient 1708 corresponds to a suggested recipient, such as a user belonging to a contact list of the sender device (e.g., a favorite contact, a recently interacted with contact, a new contact, etc. within a contact list of a communication application, a messaging application, an email application, a social media application, etc.). The recipient 1708 can be manually input to the sender electronic device (e.g., selected from a contact list and/or manually input via text insertion by the user of the sender electronic device). In some examples, the intended recipient can be the person using the receiving device. In one or more examples, the recipient 1708 can be activated/selected by a selection (e.g., a pinch air gesture performed by a hand of the user of the sender electronic device) from the user of the sender electronic device. Once activated, the user of the sender electronic device can be prompted to select another (e.g., an additional) recipient from a contact list. In some examples, once activated, the user of the sender electronic device can be prompted to manually input information associated with a recipient.

In some examples, the sender electronic device displays a device or user-defined default authentication option 1710. In some examples, a user of the sender electronic device can select one or more authentication options 1710 that the user of the receiver electronic device must perform before access to the secured content is granted. Alternatively, in some examples, the receiver can select from one or more authentication options 1710 via which the receiver is authenticated by the receiver electronic device before obtaining access to the secured content. In some examples, the one or more authentication options 1710 include and/or have one or more characteristics of authentication options previously described herein.

One or more user interface buttons 1712 can be displayed in the virtual window 1704, as mentioned above. In one or more examples, the one or more user interface buttons 1712 can include a "share" button. The activation of the "share" button can initiate the transmission of the secured content from the sender device to the receiver electronic device. For example, in FIG. 17, the sender electronic device detects a hand 1720 of a user of the sender electronic device perform an air gesture (e.g., an air pinch gesture) while a gaze location 1722 of the user of the sender electronic device is directed to the "share" button displayed on the virtual window 1704. In some examples, the one or more user interface buttons 1712 can include a "cancel" button. Activation of the cancel button can cause the virtual window 1704 to close (e.g., cease to be displayed) on the display 1702. Further, activation of the cancel button can forgo sending the secured content to the receiver electronic device. In some examples, the secured content can include a screen recording of a display of the sender electronic device. For example, the screen recording can include a view of a viewport and/or a field of view of a user of the sender electronic device that includes passthrough of a physical environment that the sender electronic device and the user of the sender electronic device are in (e.g., a room). In some instances, as discussed in more detail below, the passthrough of the physical environment of the sender electronic device included in the secured content will be visually occluded when shared with another electronic device (e.g., a receiver electronic device), such that the physical environment of the sender electronic device is not visible in the viewport of user of the receiver electronic device when the receiver electronic device receives the secured content, thereby maintaining and/or improving user privacy.

FIG. 18 illustrates an exemplary receiver electronic device according to some examples of the disclosure. As shown in FIG. 18, a display 1802 of the receiver electronic device can include (e.g., can display) a virtual window 1804 associated with accessing secured content transmitted by the sender device above and one or more authentication options 1806. In some examples, the one or more authentication options 1806 correspond to the one or more authentication options 1710 selected/designated by the user of the sender device, as described above with reference to FIG. 17. In some examples, in response to (e.g., when and/or while) displaying the virtual window 1804, the receiver electronic device displays, via display 1802 of the receiver electronic device, an occlusion 1808 of the three-dimensional environment in the viewport of the user of the sender electronic device. In some instances, occlusion 1808 of the three-dimensional environment can include blurring the three-dimensional environment in the viewport of the user of the receiver electronic device, except the virtual window 1804. For example, the receiver electronic device initially displays an environment passthrough (e.g., environment passthrough 1803 described below), and in response to the displaying the virtual window 1804, the receiver electronic device ceases to display the environment passthrough and displays the occlusion 1808 or overlays the occlusion 1808 on the environment passthrough that is visible via display 1802. In some instances, occlusion 1808 of the three-dimensional environment can include blacking-out the three-dimensional environment in the viewport of the user of the receiver electronic device, except the virtual window 1804 (e.g., displaying a black background behind virtual window 1804). In some examples, the receiver electronic device displays occlusion 1808 in response to receiving the secured content from a sender electronic device. That is, in some instances, the receiver electronic device displays the occlusion 1808 before displaying the virtual window 1804. In some examples, the receiver electronic device displays the virtual window 1804 and the occlusion 1808 simultaneously, in response to receiving the secured content from the sender electronic device.

In some examples, virtual window 1804 includes a continue button 1810 that is selectable to initiate an authentication process for accessing the secured content. In some examples, the receiver electronic device detects a selection of the continue button 1810. In some examples, the selection can be provided by hand 520 of a user of the receiver device (e.g., via an air pinch gesture), optionally while gaze location 522 of the user of the receiver electronic device is directed to the continue button 1810. In some instances, the selection of the continue button 1810 can include touch inputs, inputs provided by one or more external devices communicatively connected to the receiver electronic device, and/or additional air gestures performed by hand 520 of the user of the receiver electronic device. In response to detecting the selection of the continue button 1810, the receiver electronic device initiates an authentication process corresponding to the one or more authentication options 1806 displayed on virtual window 1804. For example, in response to detecting a selection of the continue button 1810, the receiver electronic device initiates an eye scan of the user of the receiver electronic device, as described in further detail herein above with reference to FIGs. 6 and 7.

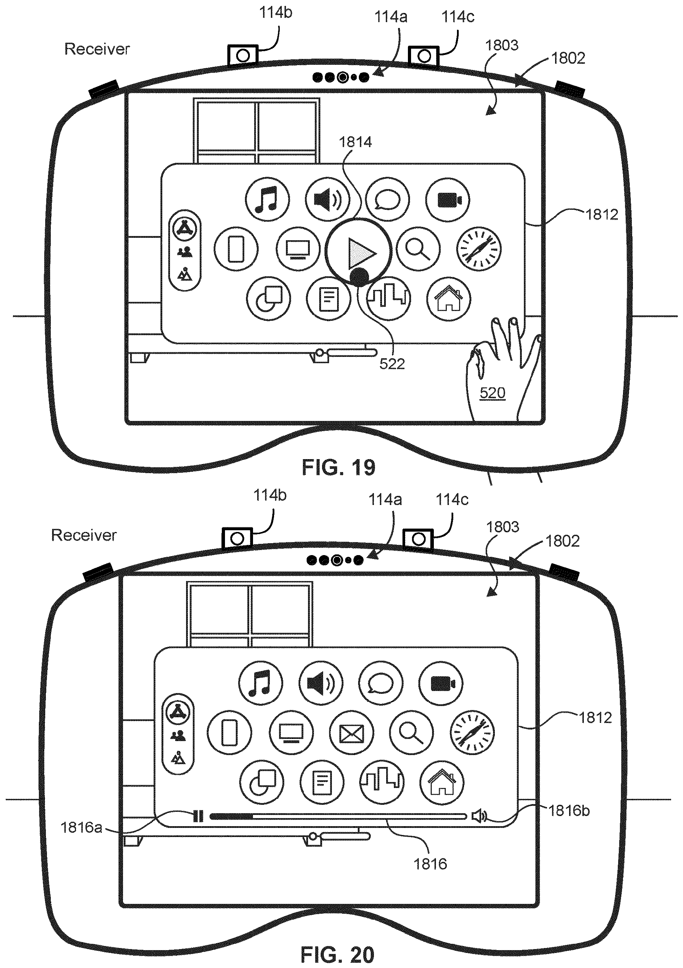

In FIG. 19, in response to successful authentication of a user of the receiver electronic device, as described herein above, the receiver electronic device (e.g., including the user of the receiver electronic device) is able to access the secured content received from the sender electronic device as shown on display 1802 of the receiver electronic device. In some examples, the secured content can be a screen recording captured by a sender electronic device, as mentioned above. In some examples, the secured content received from a sender electronic device can be displayed in a secured content window 1812. In some examples, the secured content window 1812 can include a close affordance and a grabber bar. In response to detecting an input directed to the close affordance, the receiver electronic device can cease to display the secured content window 1812. In some examples, in response to detecting an input directed to the grabber bar (e.g., an air pinch and drag gesture performed by a hand of the user of the receiver electronic device), the receiver electronic device can move the secured content window 1812 in the three-dimensional environment in accordance with a magnitude (e.g., speed, distance, and/or duration) and/or direction of the input. In some examples, the secured content window can include a video (e.g., a screen recording of a display on a sender electronic device). In some examples, the receiver electronic device detects an input (e.g., a pinch air gesture) directed to a play button 1814 of the screen recording to initiate a playback of the screen recording. In FIG. 19, as alluded to above, the user of the receiver electronic device has been successfully authenticated (e.g., in response to successful performance of the eye scan), resulting in the receiver electronic device displaying the secured content (e.g., within the secured content window 1812) in the three-dimensional environment as shown.

FIG. 20 illustrates a display 1802 displaying a snapshot of a playback of the secured content in the shared secured content window 1812. In FIG. 20, the receiver device is optionally playing back the screen recording of FIG. 19 in response to detecting the input directed to the play button 1814 discussed above. In some examples, during playback of the secured content on secured content window 1812, the receiver electronic device can display a scrubbing bar 1816 (e.g., a control that allows a user to navigate within a video clip by dragging a handle or clicking on a specific point along the bar) with the secured content window 1812 (e.g., displayed within, overlaid on, below, or otherwise proximate to the secured content window 1812) in the three-dimensional environment. In some examples, the scrubbing bar 1816 can include a playback button 1816a (e.g., a pause button and/or a play button) and a volume button 1816b. In response to detecting an input directed to the playback button 1816a, the receiver electronic device optionally ceases or resumes playback of the secured content (e.g., the screen recording) in the secured content window 1812. In response to detecting an input directed to the volume button 1816b, the receiver electronic device can adjust the volume of the playback of the secured content. In some examples, a user of the receiver electronic device can navigate to various points (e.g., time frames) in the playback of the secured content by providing an input directed to scrubbing bar 1816.

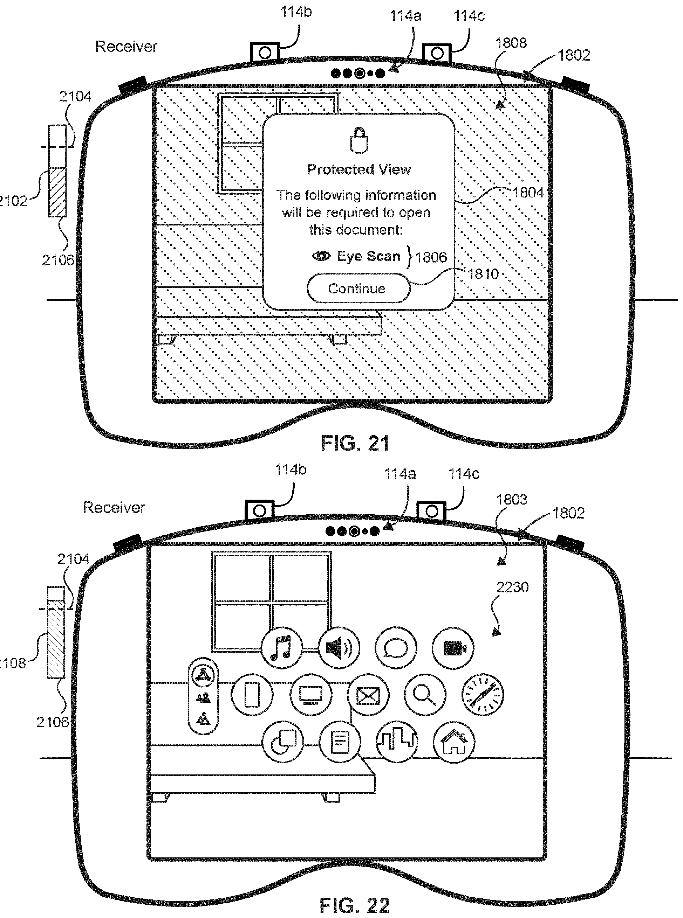

FIG. 21 illustrates an exemplary receiver electronic device (e.g., corresponding to the receiver electronic device of FIG. 18) according to some examples of the disclosure. As shown in FIG. 21, a display 1802 of the receiver electronic device can include (e.g., can display) a virtual window 1804 and one or more authentication options 1806, as described in further detail above with reference to FIG. 18. In some examples, after receiving secured content from a sender electronic device and displaying the virtual window 1804 associated with accessing the secured content as shown in FIG. 18, the receiver electronic device ceases display of the virtual window 1804 in the three-dimensional environment in accordance with a determination that the receiver electronic device does not detect an input directed to the continue button 1810 within a threshold amount of time (e.g., 15, 30, 45, 60, 75, 90, 120, etc. seconds) of the display of the virtual window 1804. In the example of FIG. 21, the receiver electronic device does not detect an input directed to the continue button 1810 for a first duration of time 2102 that is less than a threshold duration of time 2104 (e.g., the threshold amount of time) indicated by time bar 2106. Accordingly, as illustrated in FIG. 21, the receiver electronic device maintains display of (e.g., continues to display) the virtual window 1804 and the occlusion 1808 in the three-dimensional environment. In some examples, as alluded to above, the first duration of time 2102 begins in response to the receiver electronic device receiving the secured content from a sender electronic device. In some examples, first duration of time 2102 begins when the receiver electronic device displays the virtual window 1804 with the occlusion 1808.

In FIG. 22, in response to the receiver electronic device not detecting an input directed to the continue button 1810 for a second duration of time 2108 that is greater than the threshold duration of time 2104, the receiver electronic device can cease to display the occlusion 1808 and the virtual window 1804 in the three-dimensional environment. As shown in FIG. 22, when the receiver electronic device ceases to display the virtual window 1804 and the occlusion 1808 discussed above, environment passthrough 1803 becomes visible in the viewport of the receiver electronic device. Additionally, in some examples, the receiver electronic device displays menu 2230 (e.g., a home screen user interface of the receiver electronic device) on the display 1802 of the receiver electronic device (optionally in response to detecting an input for displaying the menu 2230, such as a selection of a hardware input element (e.g., physical button or switch) of the receiver electronic device. In some examples, a user of a sender electronic device can re-send the same, or different, secured content to initiate a similar content sharing process, as described previously above with reference to FIG. 18 to FIG. 20, in accordance with a determination that the second duration of time exceeds the threshold duration of time 2104.

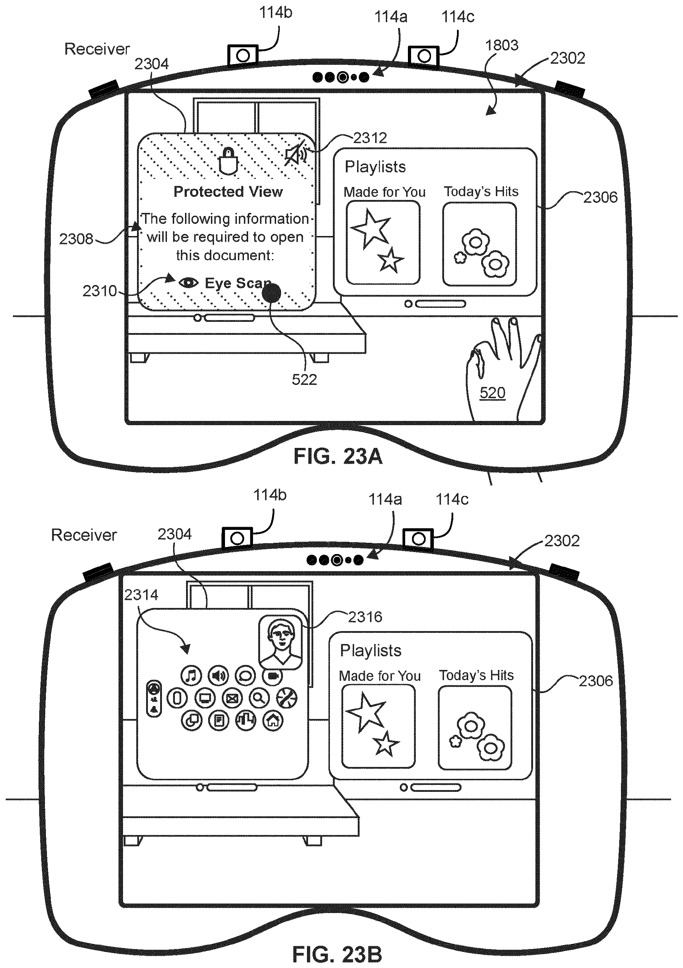

FIGs. 23A-23B illustrate an exemplary receiver electronic device according to some examples of the disclosure. In some examples, as shown in FIG. 23A, the receiver electronic device is displaying a first virtual window 2304 and a second virtual window 2306 on display 2302. In some examples, first virtual window 2304 can correspond to a video chat or call (or other live messaging and/or video conferencing user interface and/or application) with a sender electronic device (e.g., the receiver electronic device is in a video chat or call with the sender electronic device). In some examples, the sender electronic device has initiated a screen share with the receiver electronic device while the electronic devices are participating in the video chat or call, as displayed in the first virtual window 2304 in FIG. 23B. In some examples, in accordance with a determination that the sender electronic device has attempted a screen share with the receiver electronic device, the sender electronic device generates a notification (e.g., an audio notification, a visual notification, a haptic notification) to alert the user of the sender electronic device that at least a portion of the content that the user is attempting to share with the receiver electronic device is restricted. For example, in accordance with a determination that the sender electronic device has attempted a screen share with the receiver electronic device, the sender electronic device generates an audio notification (e.g., a tone specific to an alert) that indicates that at least a portion of the content that the user is attempting to share with the receiver electronic device is restricted, In some instances, in accordance with a determination that the sender electronic device has attempted a screen share of restricted content with the receiver electronic device, the sender electronic device generates a notification that includes any combination of a visual, audio, and haptic alert. For example, the notification can include a text pop-up, an alert tone, and a vibration of the sender electronic device, which indicates that the content the user of the sender electronic device is attempting to send and/or share is restricted. In some examples, the screen share includes secured content, such that a user of the receiver electronic device can provide (and/or is required to provide) one or more inputs (e.g., an air pinch gesture performed by hand 520 while gaze location 522 is directed to the one or more authentication options 2310) to satisfy one or more criteria to authenticate an identity of the user of the receiver electronic device by performing one or more authentication processes corresponding to one or more authentication options 2310, as similarly described above. In some examples, the one or more authentication options 2310 can be selected by a user of a sender electronic device as described above with reference to FIG. 17. Additionally or alternatively, the receiver electronic device optionally does not display one or more authentication options 2310 shown in FIG. 23A. For example, in response to the sender electronic device initiating a screen share or window share (e.g., or similar content sharing technique) with the receiver electronic device, and in accordance with a determination that the screen share includes secured content (e.g., content not accessible by the receiver electronic device), the receiver electronic device can display the first virtual window 2304 as blacked out or otherwise occluded, as similarly shown in FIG. 23A, with the exception of the sub-window 2316 in FIG. 23B that includes a representation of a user of the sender electronic device. In some examples, when the first virtual window 2304 is associated with a video conferencing application in an active conference call, a sender electronic device that initiates a screen share can be any electronic device, other than the receiver electronic device, which is a participant in the active conference call. In some examples, once the electronic device, other than the receiver electronic device, initiates a screen share of secured content, and in accordance with a determination that at least one participant in the active conference does not have authorization to view or otherwise interact with the secured content, the receiver electronic device displays the first virtual window 2304 as blacked out with the exception of the sub-window 2316 that can include a representation of a user of the participant (and/or other participants) in the active conference call that initiated the sharing of the secured content.

In some examples, in accordance with a determination that the secured content being shared during the video call contains audio, the receiver electronic device can mute the audio associated with the secured content until the user of the receiver electronic device is authenticated, as represented by audio indicator 2312. However, in some examples, audio from the video call itself (e.g., audio from a user of the sender electronic device that is captured via one or more microphones of the sender electronic device) is not muted by the receiver electronic device. In some examples, the second virtual window 2306 can be associated with another application on the receiver electronic device (e.g., a photo application, a music application, a messaging application, etc.). In some examples, the second virtual window 2306 in FIG. 23A is not included in the secured content that is being transmitted from the sender electronic device. For example, the receiver electronic device is displaying the second virtual window 2306 on the display 2302 prior to the sender electronic device transmitting the secured content (e.g., prior to the receiver electronic device displaying the "Protected View" interface on the first virtual window 2304). In some examples, the second virtual window 2306 corresponds to and/or is associated with an application that is local to the receiver electronic device. That is, the content displayed in the second virtual window 2306 is being displayed via an application running on the receiver electronic device, such as in response to a user of the receiver electronic device providing an input to launch the application corresponding to the second virtual window 2306. As such, in some examples, the receiver electronic device does not apply (e.g., display) an occlusion on the content of the second virtual window 2306 and/or does not mute audio associated with (e.g., being output with) the content of the second virtual window 2306.

In FIG. 23B, in accordance with a determination that the authentication process initiated in FIG. 23A is successful, the receiver electronic device displays the secured content (e.g., menu 2314 of the sender electronic device) on and/or within the first virtual window 2304. In some examples, the first virtual window 2304 includes a sub-window 2316 (e.g., a user interface element within the first virtual window 2304) that displays a representation of a user of the sender electronic device. For example, as mentioned above, the user of the receiver electronic device and the user of the sender electronic device are participating in and/or communicating via a video call; accordingly, when the secured content (e.g., the screen share that includes the menu 2314) is displayed by the receiver electronic device in FIG. 23B, the receiver electronic device also displays an image or video representation of the user of the sender electronic device. In some examples, in accordance with a determination that the authentication process initiated in FIG. 23A is successful, audio is enabled for both the secured content and the user of the sender electronic device (e.g., audio captured via one or more microphones of the sender electronic device).

It should be understood that, although the exemplary user interfaces and user interface elements illustrated in FIGs. 17-23 are described above as being displayed in and/or contained within virtual windows, in some examples, the exemplary user interfaces and user interface elements are provided in additional or alternative virtual objects that are presented by the electronic device 101 in the three-dimensional environments. For example, the user interfaces and/or user interface elements are presented as standalone (e.g., individual) virtual objects that are interactable in the three-dimensional environments, rather than being contained to a virtual window or other container in the three-dimensional environments.

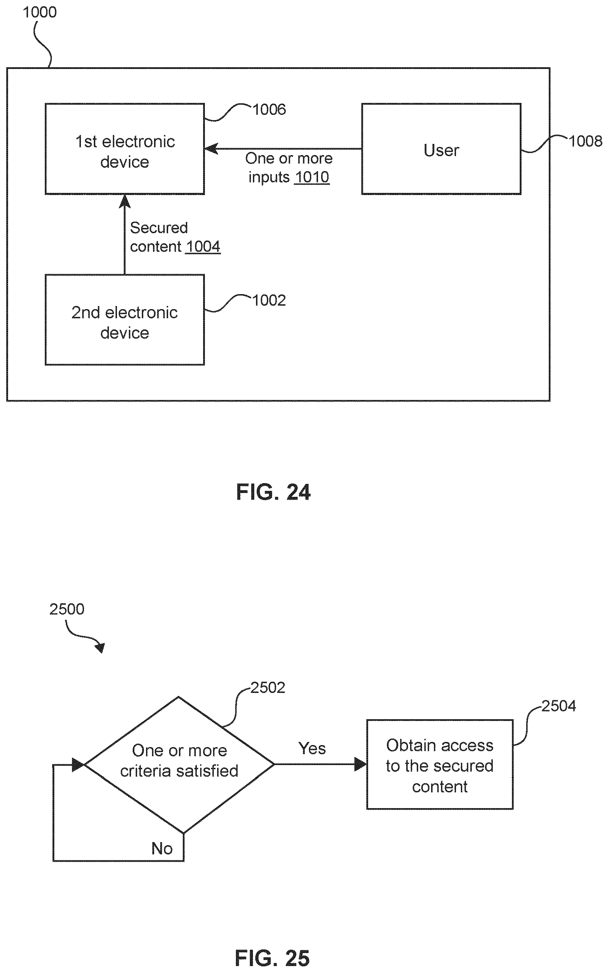

In some examples, access to secured content can be restricted geographically. Optionally, access to secured content is granted so long as the electronic device remains within trusted location boundaries. Optionally, access to secured content is available using less restrictive authorization (e.g., as previously discussed above). FIG. 24 illustrates a user 1008 providing one or more inputs 1010 into a first electronic device 1006 (e.g., a receiver electronic device) for verification within a trusted location boundary 1000. In some examples, the first electronic device 1006 can be connected to a wired or wireless network associated with the trusted location. This connection can be indicated by a media access control (MAC) address and/or an internet protocol (IP) address associated with the electronic device 1006. In some examples, locations services (e.g., GPS or other location tracking) of the electronic device 1006 can be enabled such that the sender electronic device can confirm that the first electronic device 1006 is within the trusted location. In some examples, the trusted location boundary 1000 can be a physical location. For example, the trusted location boundary 1000 can be a building associated with a trusted entity (e.g., a company, a school, a workplace, a home, etc.). In some examples, the trusted boundary can be or include a plurality of buildings associated with a trusted entity. It should be noted that the trusted entity can be verified through a verification process prior to the initiation of the authentication process described above, such that locations associated with the trusted entity can require reduced verification requirements for devices that are within and/or proximate to the locations associated with the trusted entity. In some examples, a second electronic device (e.g., sender electronic device) 1002 can transmit secured content 1004 to a first electronic device 1006 located within the trusted location boundary 1000. For example, the sender electronic device 1002 can transmit the secured content 1004 with one or more selected authentication options, as described above in FIGs. 3-4, while the receiver electronic device (e.g., first electronic device 1006) and the sender electronic device (e.g., second electronic device 1002) are both located within the trusted location boundary 1000. In some examples, both the first electronic device 1006 and the second, sender electronic device 1002 are associated with the trusted location. In some examples, the second, sender electronic device 1002 can be connected to the same wired or wireless network associated with the trusted location as the first electronic device 1006. In some examples, the secured content 1004 can include (e.g., require) one or more authentication requirements for gaining access to the secured content 1004, as described herein. In some examples, a user 1008 associated with the first electronic device 1006 can provide one or more inputs 1010 to satisfy the one or more authentication requirements as described herein. In some examples, access to the secured content is revoked once the first electronic device 1006 is not within the trusted location boundary 1000. In some examples, the user 1008 can be a part of the trusted entity associated with the trusted location boundary 1000. For example, the user 1008 can be an employee or an employer associated with the trusted entity, a student associated with the trusted entity, an occupant or family member associated with the trusted entity, etc. In some examples, a number of the one or more authentication requirements can be smaller than a number of authentication requirements if the electronic device 1006 and/or the user 1008 were outside of the trusted location boundary 1000.

FIG. 25 is a flow diagram illustrating a method 2500 for obtaining access to secured content according to some examples of the disclosure. In some examples, an electronic device can perform method 2500. In some examples, the electronic device is optionally a head-mounted display similar or corresponding to electronic device 201 of FIG. 2 and/or electronic device 101 of FIG. 1. Optionally, one or more operations of the method 2500 are programmed in instructions stored using non-transitory computer readable storage media.

At 2502, the electronic device can determine whether one or more authentication requirements are satisfied. The one or more authentication requirements can include one or more authentication methods being performed (e.g., authentication inputs being provided) as described herein. For example, an authentication requirement of the one or more authentication requirements can include performing an eye scan that verifies the identity of a user of an electronic device. In some examples, an authentication requirement of the one or more authentication requirements can include inputting a code that matches a code (e.g., a predefined access code) stored on the electronic device or otherwise accessible by the electronic device. In some examples, if the one or more requirements are not satisfied, the electronic device can repeat step 2502 until the one or more authentication requirements are satisfied. If the one or more authentication requirements are satisfied, then the electronic device can obtain access to the secured content. For example, a user of the electronic device can provide one or more inputs into the electronic device to satisfy the one or more authentication requirements. In response to providing one or more inputs to the electronic device that satisfy the one or more authentication requirements, the user of the electronic device can obtain access to the secured content. It should be noted that the electronic device performing method 2500 can improve upon existing authentication processes and provide improved security for the user sharing the content and/or the user viewing the content, which helps improve user-device interaction and reduces consumption of computing resources.

It is understood that method 2500 is an example and that more, fewer, or different operations can be performed in the same or in a different order. Additionally, the operations in method 2500 described above are, optionally, implemented by running one or more functional modules in an information processing apparatus such as general-purpose processors (e.g., as described with respect to FIG. 2) or application specific chips, and/or by other components of FIG. 2.

In some examples, an application includes application data that, when executed by an electronic device, limits certain functionalities of the electronic device (e.g., screen capture, screen recording, screen sharing, and the like) while the application is open on the electronic device. As such, sensitive information displayed on the application cannot be captured or duplicated and/or shared with another electronic device and/or another user, as outlined below.

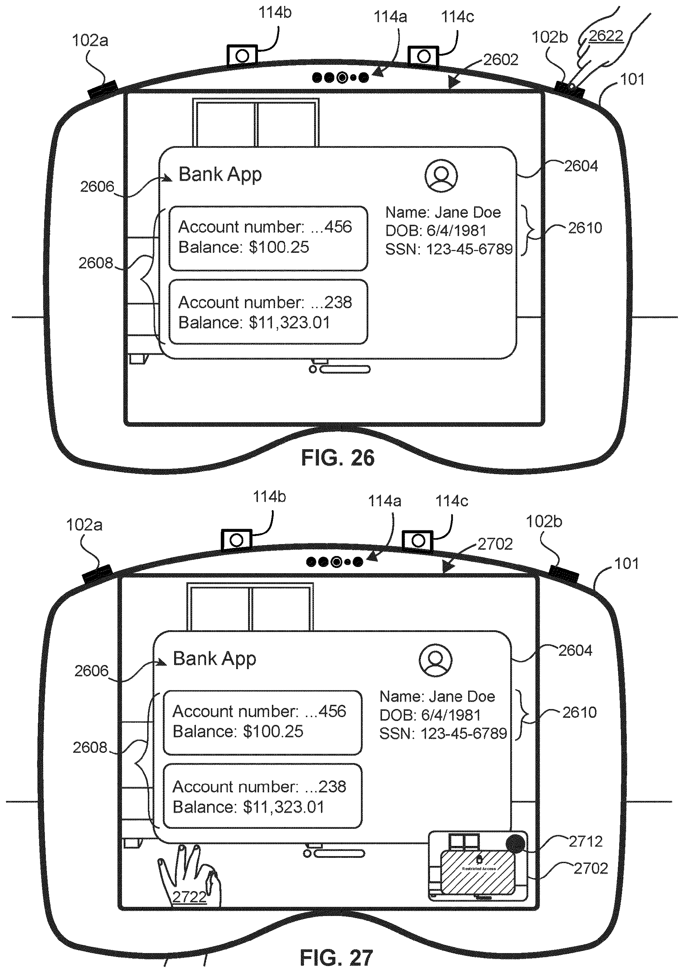

FIG. 26 illustrates a display 2602 of an exemplary electronic device, displaying a virtual window 2604 in a three-dimensional environment. In some examples, the electronic device displays virtual window 2604 in an immersive environment. For example, an immersive environment can include the electronic device displaying a mountain landscape view, a desert view, or a city background, behind virtual window 2604. In some examples, the virtual window 2604 can include one or more user interface elements for interactions with the virtual window, optionally including a close affordance and a grabber bar as shown. In response to detecting an input (e.g., an air pinch gesture) directed to the close affordance, the electronic device ceases to display the virtual window 2604. In some examples, in response to detecting an input directed to the grabber bar (e.g., an air pinch and drag gesture performed by a hand of the user of the electronic device), the electronic device can move the virtual window 2604 in the three-dimensional environment in accordance with a magnitude (e.g., speed, distance, and/or duration) and/or direction of the input. In some examples, the virtual window 2604 includes and/or corresponds to an application user interface 2606. In FIG. 26, an example mobile banking application is displayed (e.g., by a user providing an input to an application icon corresponding to the mobile banking application causing the mobile banking application to be launched, thereby displaying the virtual window 2604). The electronic device displays the virtual window 2604 including application user interface 2606 in the three-dimensional environment. In some examples, the application user interface 2606 can include application user interface information 2608 and application user interface secured information 2610. In some examples, application user interface information 2608 and application user interface secured information 2610 can be displayed simultaneously, as shown in FIG. 26. In some examples, application user interface information 2608 can be displayed upon an initial launch of the application associated with virtual window 2604. In some examples, application user interface secured information 2610 can be displayed once a user of the electronic device verifies their identity (e.g., via a biometric authentication). In some examples, both the application user interface information 2608 and the application user interface secured information 2610 can be displayed once the identity of the user of the electronic device is verified.

In some examples, the application user interface information 2608 includes information that is displayed upon the launching of an application corresponding to application user interface 2606. In some examples, the application user interface information 2608 includes non-sensitive information that can be viewed by other electronic devices and/or users. For example, the application user interface information 2608 includes a name associated with a user of the electronic device and/or partial account numbers of an account associated with the user of the electronic device. In some examples, application user interface information 2608 can include information within an application that can be viewed (e.g., shared) by a separate electronic device and/or user. For example, in FIG. 26, the application user interface 2606 includes account balance information associated with a user (e.g., "Jane Doe"), who is optionally the user of the electronic device. In some examples, the account information is available for viewing because the application corresponding to the application user interface 2606 is in a "Remember Me" mode that enables the user of the electronic device to view application user interface information that can be usually protected by biometric authentication. In some examples, the user of the electronic device has already successfully completed an authentication process (e.g., a biometric scan) associated with the application corresponding to the user interface 2606. For example, in response to a successful authentication process, the electronic device displays application user interface 2606 (e.g., as illustrated in FIG. 26). In some examples, once the identity of the user of the electronic device is verified, the electronic device can display sensitive information (e.g., application user interface secured information 2610) additionally or alternatively, to the application user information 2608. Additionally or alternatively, account balance information included in the application user information 2608 can be marked or flagged as sensitive information (e.g., similar to application user interface secured information 2610) based on application-specific preferences, as described in further detail below. For example, a user of the electronic device and/or a developer of the application associated with virtual window 2604 can select which information is displayed, by the electronic device, as application user interface information 2608 and application user interface secured information 2610, once the electronic device executes the application associated with virtual window 2604.

In some examples, application user interface secured information 2610 includes information associated with a user of the electronic device that is sensitive and cannot be shared with another electronic device and/or user. For example, as shown in FIG. 26, the application user interface secured information 2610 can include a name of a user (optionally a user of the electronic device), a date of birth of a user of the electronic device, and a social security number of the user of the electronic device (e.g., as shown in FIG. 26). In some examples, the application user interface secured information 2610 is displayed in response to the user of the electronic device verifying their identity, via an authentication process as described in further detail above. In some examples, further authentication is required to access application user interface secured information 2610. For example, if the user of the electronic device completes a first authentication process (e.g., a biometric scan) to access the application user interface 2606, the user can provide further authentication information (e.g., a pin, a two-factor authentication, an identification card scan) that will enable access to view (e.g., the electronic device displays) the application user interface secured information 2610.

In some examples, based on the application, the application user interface information 2608 and the application user interface secured information 2610 cannot be shared via screen sharing and/or screen recording. For example, application data associated with the application that is used to execute the application on the electronic device indicates which portions of the application user interface information are secured (e.g., application user interface secured information 2610). As such, the application data can further include an indication of what capabilities are restricted (e.g., screen capture, screen recording, etc.) while the user of the electronic is interacting with and/or viewing the application user interface information. For example, the electronic device prevents and/or restricts secured and/or user-sensitive information included in the application user interface information 2608 and/or the application user interface secured information 2610 from being captured or duplicated (e.g., such as via a screen capture, screen recording, and/or screen share).

In some examples, in response to a user of the electronic device taking a screen capture of display 2602 (e.g., or providing other input corresponding to a request to capture one or more images (e.g., screenshot or screen recording) of the secured and/or user-sensitive information), the electronic device will not be able to (e.g., the feature is disabled and/or the feature is enabled, but with modifications such that the electronic device cannot) subsequently share the screen capture of display 2602 including the secure information. For example, as shown in FIG. 26, in response to the user of the electronic device providing one or more inputs to buttons 102a and 102b (e.g., a concurrent press of the buttons 102a and 102b) while the electronic device displays the three-dimensional environment via display 2602, the electronic device performs one or more operations (e.g., described below) based on the request to capture and/or generate a snapshot of display 2602. In some examples, the snapshot of display 2602 can include passthrough of the physical environment in which the electronic device and/or the user of the electronic device are located. In some examples, the snapshot of display 2602 can include only virtual window 2604 (or any other selected virtual window being displayed on the display 2602). In some examples, the snapshot of display 2602 can include passthrough of the physical environment that the electronic device and/or the user of the electronic device are located in, and any virtual windows (e.g., including virtual window 2604) being displayed on display 2602.

In some examples, once the electronic device captures the screen capture of display 2602, the electronic displays, via display 2702, as shown in FIG. 27, the three-dimensional environment that includes virtual window 2604 and a screen capture window 2712. In some examples, the screen capture window 2712 corresponds to the snapshot captured by the user of the electronic device with reference to FIG. 26. In some examples, the screen capture window 2712 can be displayed as a picture-in-picture window, optionally in a (e.g., bottom right) corner of display 2702. In some examples, the screen capture window 2712 can be displayed as an overlay over (e.g., in front of) the virtual window 2604 on display 2702. In some examples, the screen capture window 2712 can be displayed in any portion of the display 2702, such that there is no spatial conflict between the screen capture window 2712 and the virtual window 2604, or any other window and/or object being displayed on display 2702. It is understood that, in some examples, the electronic device 101 does not display the screen capture window 2712 when the electronic device 101 captures the screen capture of display 2602. For example, the electronic device 101 forgoes displaying an indication that the screen capture has been performed at the electronic device 101. Additionally or alternatively, the screen capture of display 2602 can be saved to a photo repository application or other data (e.g., files) repository application (e.g., a photos application or a library application) after being generated on the electronic device. In some examples, the screen capture of display 2602 can be automatically saved to a photo repository application on the electronic device.

In some examples, as shown in FIG. 27, the user of the electronic device provides an input (e.g., an air pinch gesture performed by a hand 2722 of the user of the electronic device) directed to the screen capture window 2712 such that the screen capture window 2712 is expanded (e.g., increases in size). Additionally or alternatively, such as in the instance the electronic device 101 does not display the screen capture window 2712, the user of the electronic device can navigate (e.g., via one or more sequence of inputs) to a photo repository application on the electronic device where the screen capture of display 2602 is stored. Once the user navigates to the photo repository application, the user of the electronic device can provide an input (e.g., a selection of, such as via an air pinch gesture) directed to the screen capture of display 2602. In response to detecting the input directed to the screen capture of display 2602, the electronic device optionally displays the screen capture of display 2602 as an image, as described in further detail below.

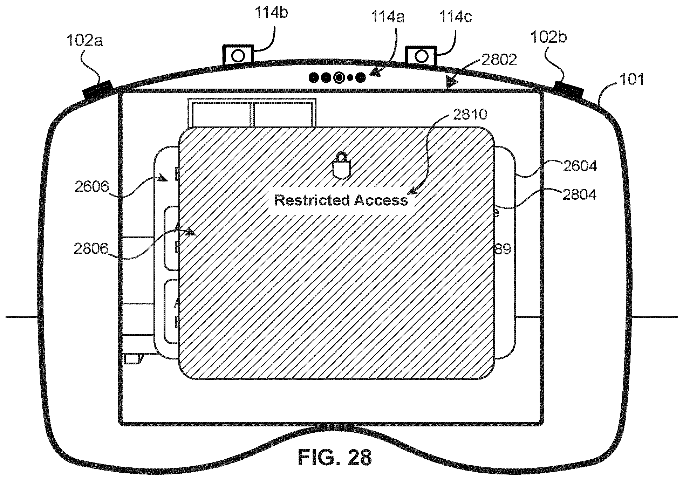

In response to detecting the input directed to the screen capture window 2712 or within the photo repository application described above, as shown in FIG. 28, the electronic device displays, via display 2802, virtual window 2604 and restricted access window 2804 (e.g., displayed overlayed on the virtual window 2604) in the three-dimensional environment. In some examples, the restricted access window 2804 corresponds to the screen capture window 2712 in FIG. 27. In some examples, as shown in FIG. 28, the restricted access window 2804 includes a full occlusion, partial occlusion, or blurring of the content of the virtual window 2604 such that the content of virtual window 2604 is not discernable. For example, as discussed above, the user of the electronic device in FIG. 26 has provided an input corresponding to a request to capture a screenshot or screen recording that includes the virtual window 2604 (e.g., the content of the virtual window 2604 described above). As illustrated in FIGs. 27-28, while the electronic device generates one or more images in response to detecting the input (e.g., performs one or more operations in response to detecting the input), the one or more images do not include the content of the virtual window 2604. For example, as shown in FIG. 28, the image generated by the electronic device in response to detecting the input does not include the application user interface information 2608 and the application user interface secured information 2610. In some instances, as shown in FIG. 28, when generating the image (e.g., in the restricted access window 2804) in response to detecting the input corresponding to the request to capture a screenshot or screen recording of the display 2602 in FIG. 26, the electronic device applies an occlusion 2808 of and/or over the content of the virtual window 2604 that would be included in the screen capture window 2712. For example, the electronic device blurs the content that would be displayed/included in the screen capture or screen recording (e.g., content of the screen capture window 2712). In some instances, occlusion 2808 included in the restricted access window 2804 can include blacking-out the content would be displayed/included in the screen capture or screen recording (e.g., content of the screen capture window 2712). Additionally, in some examples, the occlusion 2808 that is applied to the restricted access window 2804 is applied to an environment passthrough (e.g., the representation of the physical environment in which the electronic device and/or the user of the electronic device is located) that would be included in the screen capture of display 2602. In some examples, as shown in FIG. 28, the restricted access window 2804 includes an indication 2810 that access is restricted. In some examples, as shown in FIG. 28, the indication 2810 includes graphical representations, such as symbols/glyphs (e.g., a lock icon) indicating that access to (e.g., visibility of) the content is blocked. In some examples, the indication 2810 includes text that indicate access is blocked, and in some instances, provide instructions to enable access, such as via an authentication process as previously described herein.

Turning back to FIG. 26, in some examples, in response to detecting an input to share a screen (e.g., display 2602) or a specific window displayed via the display 2602 (e.g., virtual window 2604), the electronic device can display a restricted access window 2804 shown in FIG. 28, or a similar window, to indicate that the information on the display 2602 is secured information not available to share. For example, in response to detecting an input to share a screen (e.g., display 2602), similar to the inputs described above with reference to sharing documents and other content, the electronic device can cease to display virtual window 2604 and begin to display restricted access window 2804. In some examples, the electronic device alternatively updates display of the virtual window 2604, in response to such an input, to include the occlusion 2806 and/or the indication 2810 that are overlaid on and/or occlude the secured content (e.g., the application user interface information 2606 and/or the application user interface secured information 2610) included in the virtual window 2604 in the three-dimensional environment. It should be noted that the application data associated with the application corresponding to the application displayed in virtual window 2604 can include one or more indications of what operations (e.g., screen share, screen capture) are granted to a user of the electronic device and/or the electronic device itself. Additionally or alternatively, in some examples, the electronic device 101 generates and presents a notification that the content that the user of the electronic device has attempted to capture and/or record includes restricted content, thereby resulting in the display of the restricted access window 2804. For example, returning to FIG. 26, when the electronic device detects the input provided by the user corresponding to a request to capture one or more images (e.g., screenshot or screen recording) or share the one or more images (e.g., such as via a screen share) of the secured and/or user-sensitive information, the electronic device displays a notification or other user interface or message and/or outputs audio that indicates to the user that the capturing and/or sharing of the one or more images of the secured and/or user-sensitive information is restricted. In some examples, the notification is provided as an alternative to the display of the screen capture window 2712.

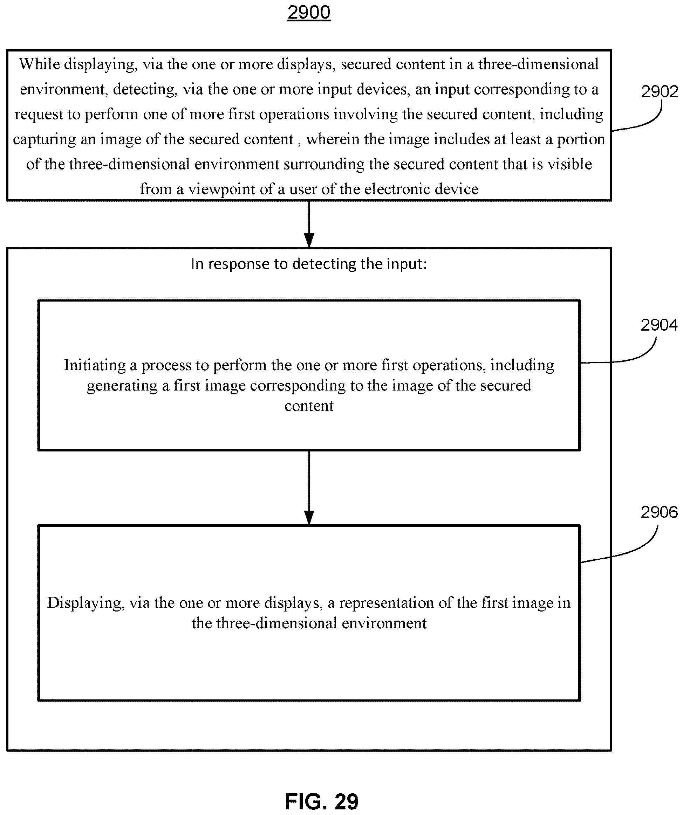

FIG. 29 is a flow diagram illustrating a method 2900 for navigating to restricted content according to some examples of the disclosure. In some examples, an electronic device can perform method 2900. In some examples, the electronic device is optionally a head-mounted display similar or corresponding to electronic device 201 of FIG. 2 and/or electronic device 101 of FIG. 1. Optionally, one or more operations of the method 2900 are programmed in instructions stored using non-transitory computer readable storage media.

In some examples, at block 2902, while displaying, via the one or more displays, secured content in a three-dimensional environment (e.g., application user interface secured information 2610 in virtual window 2604 in FIG. 26), the electronic device detects, via the one or more input devices, an input corresponding to a request to perform one of more first operations involving the secured content, including capturing an image of the secured content, where the image includes at least a portion of the three-dimensional environment surrounding the secured content (e.g., passthrough around the secured content of virtual window 2604 in FIG. 26) that is visible from a viewpoint of a user of the electronic device, such as a user of an electronic device providing inputs to buttons 102a and 102b of an electronic device, as shown in FIG. 26.

In some examples, at block 2904, in response to detecting the input, the electronic device initiates a process to perform the one or more first operations, including generating a first image corresponding to the image (e.g., screen shot/recording is captured and saved to photos app), such as the electronic device generating screen capture window 2712 and optionally subsequently displaying screen capture window 2712, as shown in FIG. 27.In some examples, at block 2906, in response to detecting the input, the electronic device displays, via the one or more displays, a representation of the first image in the three-dimensional environment, such as the electronic device displaying restricted access window 2804 corresponding to the screen capture window 2712, as shown in FIG. 28. In some examples, the representation of the first image includes a visual indication that visibility of the secured content is restricted, without including the secured content, such as indication 2810 of the restricted access window 2804, and an occluded representation of the at least the portion of the three-dimensional environment that is visible from the viewpoint of the user of the electronic device, such as occlusion 2806 shown in FIG. 28.

It is understood that method 2600 is an example and that more, fewer, or different operations can be performed in the same or in a different order. Additionally, the operations in method 2600 described above are, optionally, implemented by running one or more functional modules in an information processing apparatus such as general-purpose processors (e.g., as described with respect to FIG. 2) or application specific chips, and/or by other components of FIG. 2.

Therefore, according to the above, some examples of the disclosure are directed to a method comprising, at an electronic device in communication with one or more displays and one or more input devices: receiving, from a sender device, a secured document including content; in response to receiving the secured document, presenting one or more prompts for one or more respective inputs for accessing the secured document; detecting, via the one or more input devices, one or more respective inputs; and in response to detecting the one or more respective inputs, in accordance with a determination that the one or more respective inputs satisfy one or more criteria, including a criterion that is satisfied when the one or more respective inputs authenticate a user, obtaining access to the content of the secured document.

Additionally or alternatively, in some examples, the one or more respective inputs comprise a first image, wherein the first image includes an image of one or more eyes of the user; the image of one or more eyes of the user is compared to one or more stored images of the one or more eyes of the user on the electronic device, and in response to comparing the image of one or more eyes of the user to one or more stored images of the one or more eyes of the user: authenticating the user when the image of the one or more eyes of the user matches at least one of the one or more stored images of the one or more eyes of the user on the electronic device; and forgoing authenticating the user when the image of the one or more eyes of the user does not match at least one of the one or more stored images of the one or more eyes of the user on the electronic device. Additionally or alternatively, in some examples, detecting the one or more respective inputs comprises: detecting an image of an identification badge; processing the image of the identification badge to extract one or more facial characteristics from the identification badge; and comparing the one or more facial characteristics extracted from the identification badge to one or more stored facial characteristics associated with a member of an authenticated enterprise.

Additionally or alternatively, in some examples, the one or more respective inputs comprise a first respective input of the one of more respective inputs, wherein the first respective input includes an authentication code that is displayed on a secondary device, different from the electronic device, which is associated with the user of the electronic device, and the determination that the one or more respective inputs satisfy the one or more criteria is in accordance with a determination that the authentication code is properly input into the electronic device. Additionally or alternatively, in some examples, the one or more criteria comprise a first criterion that is satisfied when the electronic device is within a threshold distance of an authorized location, the one or more respective inputs comprise providing access to a current location of the electronic device, and the method further comprises, in response to detecting the one or more respective inputs: in accordance with a determination that the electronic device is within the threshold distance of the authorized location, obtaining the access to the content of the secured document; and in accordance with a determination that the electronic device is not within the threshold distance of the authorized location, displaying, via the one or more displays, one or more second digital prompts for accessing the secured document.

Additionally or alternatively, in some examples, the method further comprises, in response to receiving the secured document, verifying location data associated with the electronic device, wherein verifying comprises: determining if the location data associated with the electronic device is accessible; and in response to determining if the location data associated with the electronic device is accessible: in accordance with the determination that the location data is accessible, identifying a location of the electronic device based on the location data, and obtaining access to the secured document; and in accordance with the determination that the location data is not accessible, requesting, to the user of the electronic device, access to the location data associated with the electronic device, and upon receiving access to the location data associated with the electronic device, identifying a location of the electronic device based on the location data, and obtaining access to the secured document. Additionally or alternatively, in some examples, the method comprises: in response to receiving the secured document, verifying location data associated with the electronic device; and in response verifying that the location data: identifying that the electronic device is within a threshold distance of an authorized location; displaying, via the one or more displays, a first prompt of the one or more prompts; detecting, via the one or more input devices, a first respective input of the one or more respective inputs; and in accordance with a determination that the first respective input of the one or more respective inputs satisfies the criterion, obtaining access to the secured document.

Additionally or alternatively, in some examples, detecting the one or more respective inputs further comprises: detecting a visual representation of the user of the electronic device; and transmitting data corresponding to the visual representation of the user of the electronic device to the sender device. Additionally or alternatively, in some examples, the method further comprises after obtaining the access to the content of the secured document, transmitting usage data from the electronic device to the sender device, wherein the usage data comprises one or more time stamps corresponding to one or more actions associated with the content of the secured document. In some examples, the usage data further comprises one or more indications of at least a modification to the content of the secured document. In some examples, the method further comprises, in response to detecting the one or more respective inputs, in accordance with a determination that the one or more respective inputs do not satisfy the one or more criteria, preventing access to the content of the secured document.

Additionally or alternatively, in some examples, obtaining access to the content of the secured document further comprises disabling one or more content sharing capabilities of the electronic device; and restricting screen capturing capabilities of the electronic device. Additionally or alternatively, in some examples, a respective prompt of the one or more prompts includes instructions for the user to follow to input the one or more respective inputs that satisfy the one or more criteria, wherein the instructions comprise at least a visual portion. Additionally or alternatively, in some examples, the method further comprises, in response to receiving the secured document, displaying, via the one or more displays, a virtual window, wherein the virtual window includes: an identity of an intended recipient; and at least a graphic associated with at least an authentication process, wherein the at least an authentication process corresponds to a prompt of the one or more prompts. Additionally or alternatively, in some examples, displaying the one or more prompts further comprises: displaying a first prompt of the one or more prompts and a second prompt of the one or more prompts, wherein the first prompt and the second prompt are distinct; detecting a first respective input of the one or more respective inputs and a second respective input of the one or more respective inputs; and determining that the first respective input of the one or more respective inputs and the second respective input of the one or more respective inputs satisfy the one or more criteria. Additionally or alternatively, in some examples, the method further comprises, in response to detecting the one or more respective inputs: in accordance with a determination that a first respective input of the one or more respective inputs corresponding to a first prompt of the one or more prompts, does not satisfy the one or more criteria, displaying, via the one or more displays, a second prompt of the one or more prompts, wherein the second prompt of the one or more prompts is different from the first prompt of the one or more prompts, and wherein the second prompt of the one or more prompts corresponds to a second respective input of the one or more respective inputs.

Therefore, according to the above, some examples of the disclosure are directed to a method comprising, at an electronic device in communication with one or more displays, one or more input devices, and a second electronic: receiving secured content transmitted by the second electronic device, wherein the secured content is associated with a viewpoint of a user of the second electronic device and includes at least a portion of the three-dimensional environment of the second electronic device. In some examples, in response to receiving the secured content, displaying, via the one or more displays, a first user interface associated with accessing the secured content, wherein the first user interface includes: a representation of the at least the portion of the three-dimensional environment that is visible from the viewpoint of the user of the second electronic device, wherein the representation of the at least the portion of the three-dimensional environment is displayed with a first amount of occlusion. Additionally or alternatively, in some examples, the representation of the at least the portion of the three-dimensional environment includes an indication of an authentication process associated with obtaining access to the secured content, and while displaying the first user interface, detecting, via the one or more input devices, one or more inputs. In some examples, in response to detecting the one or more inputs and in accordance with a determination that the one or more inputs satisfy one or more criteria, obtaining access to the secured content transmitted by the second electronic device, including updating display of the representation of the at least the portion of the three-dimensional environment of the second electronic device to have a second amount of occlusion, less than the first amount of occlusion. Additionally or alternatively, in some examples, in response to detecting the one or more inputs and in accordance with a determination that the one or more inputs do not satisfy the one or more criteria, maintaining the display of the representation of the at least the portion of the three-dimensional environment of the second electronic device with the first amount of occlusion.

Additionally or alternatively, in some examples, receiving secured content transmitted by the second electronic device includes receiving a screen capture associated with the secured content that is visible from the viewpoint of the user of the second electronic device. Additionally or alternatively, in some examples, the screen capture corresponds to a screenshot including the secured content that is visible from the viewpoint of the user of the second electronic device. Additionally or alternatively, in some examples, the screen capture corresponds to a screen recording including the secured content that is visible from the viewpoint of the user of the second electronic device. Additionally or alternatively, in some examples, wherein displaying the indication of the authentication process associated with obtaining access to the secured content further includes displaying, via the one or more displays, one or more prompts of respective input for satisfying the one or more criteria, wherein the one or more prompts are overlaid on the representation of the at least the portion of the three-dimensional environment. Additionally or alternatively, in some examples, detecting the one or more inputs further comprises capturing, via the one or more input devices, an eye scan of the user of the electronic device; and the one or more criteria include a criterion that is satisfied when the captured eye scan matches at least one or more stored eye scans that are stored on the electronic device. Additionally or alternatively, in some examples, detecting the one or more inputs further comprises detecting, via the one or more input devices, one or more air gestures performed by a user of the electronic device, and the one or more criteria include a criterion that is satisfied when the one or more inputs authenticate an identity of the user of the electronic device.

Additionally or alternatively, in some examples, detecting the one or more air gestures performed by the user of the electronic device includes detecting, an input of a passcode associated with obtaining access to the secured content, directed to the first user interface, and the one or more criteria include a criterion that is satisfied when the input of the passcode associated with obtaining access to the secured content matches a stored authentication passcode. Additionally or alternatively, in some examples, displaying the indication of the authentication process associated with obtaining access to the secured content further includes displaying a first prompt of respective input for satisfying the one or more criteria. Additionally or alternatively, the method further comprises in response to detecting the one or more inputs and in accordance with a determination that the one or more inputs include a first input corresponding to a request to display a second prompt, different from the first prompt, displaying, via the one or more displays, a second user interface that includes the second prompt. In some examples, while displaying the second user interface, detecting, via the one or more input devices, second one or more inputs and in response to detecting the second one or more inputs and in accordance with a determination that the second one or more inputs satisfy the one or more criteria, obtaining access to the secured content transmitted by the second electronic device, including updating display of the representation of the at least the portion of the three-dimensional environment of the second electronic device to have the second amount of occlusion.

Additionally or alternatively, in some examples, detecting the one or more inputs further comprises detecting, via the one or more input devices, a gaze of the user of the electronic device, and the one or more criteria include a criterion that is satisfied when the gaze of the user of the electronic device is directed to a portion of the first user interface associated with obtaining access to the secured content. Additionally or alternatively, in some examples, detecting the one or more inputs includes detecting respective input provided by one or more respective electronic devices, different from the electronic device, associated with the user of the electronic device, and the one or more criteria include a criterion that is satisfied when the one or more inputs provided by the one or more respective electronic devices authenticate an identity of the user of the electronic device. Additionally or alternatively, in some examples, the one or more criteria include a criterion that is satisfied when the one or more inputs are detected with a time threshold of the first user interface being displayed.

In some examples, in response to detecting the one or more inputs, and in accordance with the determination that the one or more inputs satisfy one or more additional criteria because the one or more inputs are detected after the time threshold of the first user interface being displayed, ceasing the display of the representation of the at least the portion of the three-dimensional environment of the second electronic. Additionally or alternatively, in some examples, in response to detecting the one or more inputs, and in accordance with the determination that the one or more inputs satisfy one or more additional criteria because the one or more inputs are detected after the time threshold of the first user interface being displayed ceasing the display of the indication of the authentication process associated with obtaining access to the secured content.

Additionally or alternatively, in some examples, displaying the representation of the at least the portion of the three-dimensional environment with the first amount of occlusion includes blurring the representation of the at least the portion of the three-dimensional environment. Additionally or alternatively, in some examples, displaying the representation of the at least the portion of the three-dimensional environment with the first amount of occlusion includes reducing a brightness of the representation of the at least the portion of the three-dimensional environment. Additionally or alternatively, in some examples, the second amount of occlusion includes zero occlusion.

Additionally or alternatively, in some examples, the secured content transmitted by the second electronic device is received while the electronic device is in a communication session with the second electronic device, and receiving the secured content transmitted by the second electronic device includes receiving a request to share a respective user interface that is being displayed by the second electronic device within the communication session. Additionally or alternatively, in some examples, displaying the first user interface includes displaying, via the one or more displays, the respective user interface in a virtual window within the first user interface with the first amount of occlusion.

Additionally or alternatively, in some examples, the secured content is associated with corresponding audio, the method further comprises, in response to receiving the secured content transmitted by the second electronic device, disabling audio sharing and audio recording operations directed to the audio corresponding to the secured content by the electronic device. Additionally or alternatively, in some examples, in response to receiving the secured content, maintaining sharing capabilities for applications on the electronic device not associated with the secured content. Additionally or alternatively, in some examples, the electronic device and the second electronic device are associated with a common enterprise.

Additionally or alternatively, in some examples, the electronic device and the second electronic device are associated with the common enterprise in accordance with a determination that the electronic device is within a threshold distance from the second electronic device. Additionally or alternatively, in some examples, the electronic device and the second electronic device are associated with the common enterprise in accordance with the electronic device and the second electronic device sharing a communication network associated with the common enterprise. Additionally or alternatively, in some examples, in response to receiving the secured content, displaying the indication of the authentication process associated with obtaining access to the secured content includes displaying a first prompt to provide a scan of an identification (ID) badge; and the one or more criteria include a criterion that is satisfied when, when an ID badge scan of a first ID badge associated with the user of the electronic device is determined to be associated with the common enterprise. Additionally or alternatively, in some examples, at least one of the electronic device and the second electronic device includes a head-mounted display (HMD).

Therefore, according to the above, some examples of the disclosure are directed to a method comprising, at an electronic device in communication with one or more displays, and one or more input devices, while displaying, via the one or more displays, secured content in a three-dimensional environment, detecting, via the one or more input devices, an input corresponding to a request to perform one of more first operations involving the secured content, including capturing an image of the secured content. In some examples, the image includes at least a portion of the three-dimensional environment surrounding the secured content that is visible from a viewpoint of a user of the electronic device. Additionally or alternatively, in response to detecting the input, the electronic device initiates a process to perform the one or more first operations, including generating a first image corresponding to the image, and displays, via the one or more displays, a representation of the first image in the three-dimensional environment. Additionally or alternatively, the representation of the first image includes a visual indication that visibility of the secured content is restricted, without including the secured content, and an occluded representation of the at least the portion of the three-dimensional environment that is visible from the viewpoint of the user of the electronic device.

Some examples of the disclosure are directed to an electronic device, comprising one or more processors, memory, and means for performing any of the above methods.

Some examples of the disclosure are directed to a computer readable storage medium storing one or more programs, the one or more programs comprising instructions, which when executed by one or more processors of an electronic device, cause the electronic device to perform any of the above methods.

The present disclosure contemplates that in some examples, the data utilized can include personal information data that uniquely identifies or can be used to contact or locate a specific person. Such personal information data can include demographic data, content consumption activity, location-based data, telephone numbers, email addresses, twitter ID's, home addresses, data or records relating to a user's health or level of fitness (e.g., vital signs measurements, medication information, exercise information), date of birth, or any other identifying or personal information. Specifically, as described herein, one aspect of the present disclosure is tracking a user's biometric data.

The present disclosure recognizes that the use of such personal information data, in the present technology, can be used to the benefit of users. For example, personal information data can be used to display suggested text that changes based on changes in a user's biometric data. For example, the suggested text is updated based on changes to the user's age, height, weight, and/or health history.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data can be governed by federal and/or state laws, such as the Health Insurance Portability and Accountability Act (HIPAA); whereas health data in other countries can be subject to other regulations and policies and should be handled accordingly. Hence different privacy practices should be maintained for different personal data types in each country.

Despite the foregoing, the present disclosure also contemplates examples in which users selectively block the use of, or access to, personal information data. That is, the present disclosure contemplates that hardware and/or software elements can be provided to prevent or block access to such personal information data. For example, the present technology can be configured to allow users to select to "opt in" or "opt out" of participation in the collection of personal information data during registration for services or anytime thereafter. In another example, users can select not to enable recording of personal information data in a specific application (e.g., first application and/or second application). In addition to providing "opt in" and "opt out" options, the present disclosure contemplates providing notifications relating to the access or use of personal information. For instance, a user can be notified upon initiating collection that their personal information data will be accessed and then reminded again just before personal information data is accessed by the device(s).

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification can be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

The foregoing description, for purpose of explanation, has been described with reference to specific examples. However, the illustrative discussions above are not intended to be exhaustive or to limit the disclosure to the precise forms disclosed. Many modifications and variations are possible in view of the above teachings. The examples were chosen and described in order to best explain the principles of the disclosure and its practical applications, to thereby enable others skilled in the art to best use the disclosure and various described examples with various modifications as are suited to the particular use contemplated.

## Claims

1. A method comprising:
at an electronic device in communication with one or more displays, one or more input devices, and a second electronic device:
receiving secured content transmitted by the second electronic device, wherein the secured content is associated with a viewpoint of a user of the second electronic device and includes at least a portion of a three-dimensional environment of the second electronic device;
in response to receiving the secured content, displaying, via the one or more displays, a first user interface associated with accessing the secured content, wherein the first user interface includes:
a representation of the at least the portion of the three-dimensional environment that is visible from the viewpoint of the user of the second electronic device, wherein the representation of the at least the portion of the three-dimensional environment is displayed with a first amount of occlusion; and
an indication of an authentication process associated with obtaining access to the secured content; and
while displaying the first user interface, detecting, via the one or more input devices, one or more inputs; and
in response to detecting the one or more inputs:
in accordance with a determination that the one or more inputs satisfy one or more criteria, obtaining access to the secured content transmitted by the second electronic device, including updating display of the representation of the at least the portion of the three-dimensional environment of the second electronic device to have a second amount of occlusion, less than the first amount of occlusion; and
in accordance with a determination that the one or more inputs do not satisfy the one or more criteria, maintaining the display of the representation of the at least the portion of the three-dimensional environment of the second electronic device with the first amount of occlusion.

2. The method of claim 1, wherein receiving secured content transmitted by the second electronic device includes receiving a screen capture associated with the secured content that is visible from the viewpoint of the user of the second electronic device.

3. The method of claim 2, wherein the screen capture corresponds to a screenshot including the secured content that is visible from the viewpoint of the user of the second electronic device.

4. The method of any of claims 1-3, wherein displaying the indication of the authentication process associated with obtaining access to the secured content further includes:
displaying, via the one or more displays, one or more prompts of respective input for satisfying the one or more criteria, wherein the one or more prompts are overlaid on the representation of the at least the portion of the three-dimensional environment.

5. The method of and of claims 1-4, wherein:
detecting the one or more inputs further comprises capturing, via the one or more input devices, an eye scan of the user of the electronic device; and
the one or more criteria include a criterion that is satisfied when the captured eye scan matches at least one or more stored eye scans that are stored on the electronic device.

6. The method of any of claims 1-5, wherein:
detecting the one or more inputs further comprises detecting, via the one or more input devices, one or more air gestures performed by a user of the electronic device; and
the one or more criteria include a criterion that is satisfied when the one or more inputs authenticate an identity of the user of the electronic device.

7. The method of claim 6, wherein:
detecting the one or more air gestures performed by the user of the electronic device includes detecting, an input of a passcode associated with obtaining access to the secured content, directed to the first user interface; and
the one or more criteria include a criterion that is satisfied when the input of the passcode associated with obtaining access to the secured content matches a stored authentication passcode.

8. The method of any of claims 1-7, wherein displaying the representation of the at least the portion of the three-dimensional environment with the first amount of occlusion includes blurring the representation of the at least the portion of the three-dimensional environment.

9. The method of any of claims 1-8, wherein displaying the representation of the at least the portion of the three-dimensional environment with the first amount of occlusion includes reducing a brightness of the representation of the at least the portion of the three-dimensional environment.

10. The method of any of claims 1-9, wherein:
the secured content transmitted by the second electronic device is received while the electronic device is in a communication session with the second electronic device;
receiving the secured content transmitted by the second electronic device includes receiving a request to share a respective user interface that is being displayed by the second electronic device within the communication session; and
displaying, via the one or more displays, the respective user interface in a virtual window within the first user interface with the first amount of occlusion.

11. The method of any of claims 1-10, wherein the secured content is associated with corresponding audio, the method further comprising:
in response to receiving the secured content transmitted by the second electronic device, disabling audio sharing and audio recording operations directed to the audio corresponding to the secured content by the electronic device.

12. The method of any of claims 1-11, wherein:
the electronic device and the second electronic device are associated with a common enterprise; and
the electronic device and the second electronic device being associated with the common enterprise is in accordance the electronic device being within a threshold distance from the second electronic device.

13. The method of any of claims 1-12, wherein at least one of the electronic device and the second electronic device includes a head-mounted display (HMD).

14. An electronic device comprising:
one or more processors;
memory; and
one or more programs, wherein the one or more programs are stored in the memory and configured to be executed by the one or more processors, the one or more programs including instructions for performing a method of any of claims 1-13.

15. A non-transitory computer readable storage medium storing one or more programs, the one or more programs comprising instructions, which when executed by one or more processors of an electronic device, cause the electronic device to perform a method of any of claims 1-13.
